# EUROPEAN PATENT APPLICATION

(11) **EP 4 482 055 A2**
(43) Date of publication of application: **25.12.2024**
(21) Application number: 24210698.7
(22) Date of filing: 24.09.2019
(51) Int. Cl.: H04B 7/185

(54) **ADAPTING HARQ PROCEDURES FOR NON-TERRESTRIAL NETWORKS**

(30) Priority: 27.09.2018 US 201862737630 P
(62) Divisional of application: 19780417.2
(71) Applicant: Telefonaktiebolaget LM Ericsson (publ), 164 83 Stockholm (SE)
(72) Inventor: Lin, Xingqin, Santa Clara, 95054 (US); Gao, Shiwei, Ottawa, K2K 2V6 (CA); Liberg, Olof, 164 80 Stockholm (SE); Bergman, Johan, 164 80 Stockholm (SE); Höglund, Andreas, 164 80 Stockholm (SE); Khan, Talha, Santa Clara, 95054 (US); Sedin, Jonas, 164 83 Stockholm (SE); Zou, Zhenhua, 164 80 Stockholm (SE); Määttänen, Helka-Liina, 02420 Jorvas (FI); Eriksson Löwenmark, Stefan, 164 80 Stockholm (SE); Shokri Razaghi, Hazhir, 164 80 Stockholm (SE)
(74) Representative: Ericsson

(57) **Abstract**

A wireless device is configured with a plurality of Hybrid Automatic Repeat Request, HARQ, processes. The plurality of HARQ processes comprises a HARQ process for which a HARQ mechanism is activated and a HARQ process for which the HARQ mechanism is at least partially deactivated. The wireless device receives, from a base station, downlink control information that schedules an uplink transmission or downlink transmission. The downlink control information indicates the HARQ process for which the HARQ mechanism is at least partially deactivated. The wireless device determines that the HARQ mechanism is at least partially deactivated for the uplink transmission or downlink transmission based on the indication in the downlink control information, and transmits/receives the uplink transmission or downlink transmission with the HARQ mechanism at least partially deactivated.

## Description

### Related Applications

This application claims the benefit of provisional patent application serial number 62/737,630, filed September 27, 2018, the disclosure of which is hereby incorporated herein by reference in its entirety.

### Technical Field

The present disclosure relates to Hybrid Automatic Repeat Request (HARQ) procedures in a cellular communications system and, in particular, to HARQ procedures in relation to a non-terrestrial Radio Access Network (RAN) (e.g., a satellite-based RAN).

### Background

There is an ongoing resurgence of satellite communications. Several plans for satellite networks have been announced in the past few years. The target services vary, from backhaul and fixed wireless, to transportation, to outdoor mobile, to Internet of Things (IoT). Satellite networks could complement mobile networks on the ground by providing connectivity to underserved areas and multicast/broadcast services.

To benefit from the strong mobile ecosystem and economy of scale, adapting the terrestrial wireless access technologies including Long Term Evolution (LTE) and New Radio (NR) for satellite networks is drawing significant interest. For example, Third Generation Partnership Project (3GPP) completed an initial study in Release 15 on adapting NR to support non-terrestrial networks (mainly satellite networks) [1]. This initial study focused on the channel model for the non-terrestrial networks, defining deployment scenarios, and identifying the key potential impacts. 3GPP is conducting a follow-up study item in Release 16 on solutions evaluation for NR to support non-terrestrial networks [2].

A satellite Radio Access Network (RAN) usually includes the following components:
- Gateway that connects a satellite network to a core network
- Satellite that refers to a space-borne platform
- Terminal that refers to a User Equipment (UE)
- Feeder link that refers to the link between a gateway and a satellite
- Service link that refers to the link between a satellite and a terminal

The link from a gateway to a terminal is often called a forward link, and the link from the terminal to the gateway is often called a return link. Depending on the functionality of the satellite in the system, we can consider two transponder options:
- Bent pipe transponder: the satellite forwards the received signal back to the earth with only amplification and a shift from uplink frequency to downlink frequency.
- Regenerative transponder: the satellite includes on-board processing to demodulate and decode the received signal and regenerate the signal before sending it back to the earth.

Depending on the orbit altitude, a satellite may be categorized as a Low Earth Orbiting (LEO), a Medium Earth Orbiting (MEO), or Geostationary Orbit (GEO) satellite.
- LEO: typical heights ranging from 250 - 1,500 kilometers (km), with orbital periods ranging from 90 - 130 minutes.
- MEO: typical heights ranging from 5,000 - 25,000 km, with orbital periods ranging from 2 - 14 hours.
- GEO: typical height is about 35,786 km, with an orbital period of 24 hours.

A communication satellite typically generates several beams over a given area. The footprint of a beam is usually in an elliptic shape, which has been traditionally considered as a cell. The footprint of a beam is also often referred to as a spotbeam. The footprint of a beam may move over the earth's surface with the satellite movement or may be earth fixed with some beam pointing mechanism used by the satellite to compensate for its motion. The size of a spotbeam depends on the system design, which may range from tens of kilometers to a few thousands of kilometers.

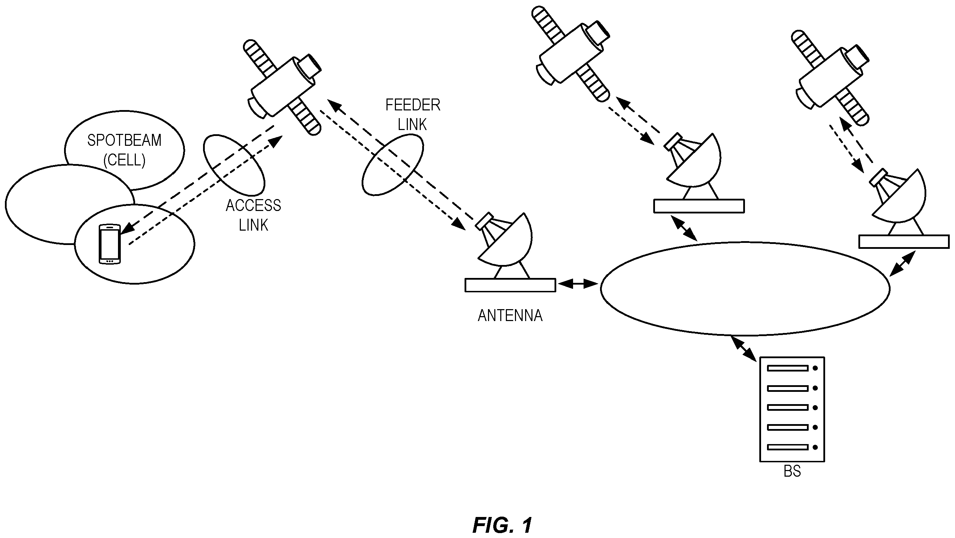

Figure 1 shows an example architecture of a satellite network with bent pipe transponders.

The two main physical phenomena that affect satellite communications system design are the long propagation delay and Doppler effects. The Doppler effects are especially pronounced for LEO satellites.

Propagation delay is a main physical phenomenon in a satellite communication system that makes the design different from that of a terrestrial mobile system. For a bent pipe satellite network, the following delays are relevant:
- One-way delay: from the base station to the UE via the satellite, or the other way around
- Round trip delay: from the base station to the UE via the satellite and from the UE back to the base station via the satellite
- Differential delay: the delay difference of two selected points in the same spotbeam

Note that there may be additional delay between the ground base station antenna and the base station, which may or may not be collocated. This delay depends on deployment. If the delay cannot be ignored, it should be taken into account in the communications system design.

The propagation delay depends on the length of the signal path, which further depends on the elevation angles of the satellite seen by the base station and UE on the ground. The minimum elevation angle is typically more than 10° for the UE and more than 5° for the base station on the ground. These values will be assumed in the delay analysis below.

The following Tables 1 and 2 are taken from 3GPP Technical Report (TR) 38.811 [1]. We can see that the round trip delay is much larger in satellite systems. For example, it is about 545 milliseconds (ms) for a GEO satellite system. In contrast, the Round Trip Time (RTT) is normally no more than 1 ms for typical terrestrial cellular networks.

**Table 1: Propagation delays for GEO satellite at 35,786 km (extracted from Table 5.3.2.1-1 in 3GPP TR 38.811 [1])**

| | **GEO at 35786 km** | | |
|---|---|---|---|
| **Elevation angle** | **Path** | **D (km)** | **Time (ms)** |
| UE :10° | satellite - UE | 40586 | 135.286 |
| GW : 5° | satellite - gateway | 41126.6 | 137.088 |
| 90° | satellite - UE | 35786 | 119.286 |

| Bent Pipe satellite | | | |
|---|---|---|---|
| One way delay | Gateway-satellite_UE | 81712.6 | 272.375 |
| Round trip Time | Twice | 163425.3 | 544.751 |

| Regenerative Satellite | | | |
|---|---|---|---|
| One way delay | Satellite -UE | 40586 | 135.286 |
| Round Trip Time | Satellite-UE-Satellite | 81172 | 270.572 |

**Table 2: Propagation delays for NGSO satellites (extracted from Table 5.3.4.1-1 in 3GPP TR 38.811 [1])**

| | | **LEO at 600 km** | | **LEO at 1500 km** | | **MEO at 10000 km** | |
|---|---|---|---|---|---|---|---|
| **Elevation angle** | **Path** | **Distance D (km)** | **Delay (ms)** | **Distance D (km)** | **Delay (ms)** | **Distance D (km)** | **Delay (ms)** |
| UE: 10° | satellite - UE | 1932.24 | 6,440 | 3647.5 | 12,158 | 14018.16 | 46.727 |
| GW: 5° | satellite - gateway | 2329.01 | 7.763 | 4101.6 | 13.672 | 14539.4 | 48.464 |
| 90° | satellite - UE | 600 | 2 | 1500 | 5 | 10000 | 33.333 |

| Bent pipe satellite | | | | | | | |
|---|---|---|---|---|---|---|---|
| One way delay | Gateway-satellite UE | 4261.2 | 14.204 | 7749.2 | 25.83 | 28557.6 | 95.192 |
| Round Trip Delay | Twice | 8522.5 | 28.408 | 15498.4 | 51.661 | 57115.2 | 190.38 |

| Regenerative satellite | | | | | | | |
|---|---|---|---|---|---|---|---|
| One way delay | Satellite -UE | 1932.24 | 6.44 | 3647.5 | 12.16 | 14018.16 | 46.73 |
| Round Trip Delay | Satellite-UE-Satellite | 3864.48 | 12.88 | 7295 | 24.32 | 28036.32 | 93.45 |

Generally, within a spotbeam covering one cell, the delay can be divided into a common delay component and a differential delay component. The common delay is the same for all UEs in the cell and is determined with respect to a reference point in the spotbeam. In contrast, the differential delay is different for different UEs which depends on the propagation delay between the reference point and the point at which a given UE is positioned within the spotbeam.

The differential delay is mainly due to the different path lengths of the service links, since the feeder link is normally the same for terminals in the same spotbeam. Further, the differential delay is mainly determined by the size of the spotbeam. It may range from sub-millisecond (for spotbeam on the order of tens of kilometers) to tens of milliseconds (for a spotbeam on the order of thousands of kilometers).

Doppler is another major physical phenomenon that shall be properly taken into account in a satellite communication system. The following Doppler effects are particularly relevant:
- Doppler shift: the shift of the signal frequency due to the motion of the transmitter, the receiver, or both.
- Doppler variation rate: the derivative of the Doppler shift function of time, i.e. it characterizes how fast the Doppler shift evolves over time.

Doppler effects depend on the relative speed of the satellites and the UE and the carrier frequency.

For GEO satellites, they are fixed in principle and thus do not induce Doppler shift. In reality, however, they move around their nominal orbital positions due to, for example, perturbations. A GEO satellite is typically maintained inside a box [1]:
- +/- 37.5 km in both latitude and longitude directions corresponding to an aperture angle of +/- 0.05°
- +/- 17.5 km in the equatorial plane

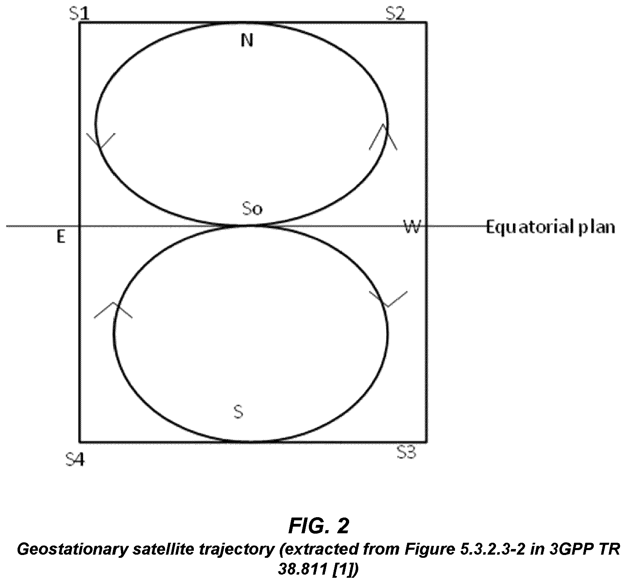

The trajectory of the GEO satellite typically follows a figure "8" pattern, as illustrated in Figure 2.

Table 3 gives example Doppler shifts of GEO satellites. For a GEO satellite maintained inside the box and moving according to the figure "8" pattern, we can see that the Doppler shifts due to the GEO satellite movement are negligible.

If a GEO satellite is not maintained inside the box, the motion could be near GEO orbit with inclination up to 6°. The Doppler shifts due to the GEO satellite movement may not be negligible.

**Table 3: Example Doppler shifts of GEO satellites (extracted from Tables 5.3.2.3-4 and 5.3.2.3-5 in 3GPP TR 38.811 [1])**

| | **Frequency** | **2 GHz** | **20 GHz** | **30 GHz** |
|---|---|---|---|---|
| S2 to S1 | Doppler shift (Hz) | -0.25 | -2.4 | -4.0 |
| S1 to S4 | Doppler shift (Hz) | 2.25 | 22.5 | 34 |
| Not maintained inside the box (with inclination up to 6°) | Doppler shift (Hz) | 300 | 3000 | 4500 |

The Doppler effects become remarkable for MEO and LEO satellites. Table 4 gives example Doppler shifts and rates of Non-GEO (NGSO) satellites. We can see that the Doppler shifts and rates due to the NGSO satellite movement should be properly considered in the communications system design.

**Table 4: Doppler shits and variation rates of NGSO satellites (extracted from Table 5.3.4.3.2-7 in 3GPP TR 38.811 [1])**

| **Frequency GHz** | **Max doppler** | **Relative Doppler** | **Max Doppler shift variation** | |
|---|---|---|---|---|
| 2 | +/- 48 kHz | 0.0024 % | - 544 Hz/s | LEO at 600 km altitude |
| 20 | +/- 480 kHz | 0.0024 % | -5.44 kHz/s | |
| 30 | +/- 720 kHz | 0.0024 % | -8.16 kHz/s | |
| 2 | +/- 40 kHz | 0.002 % | -180 Hz/s | LEO at 1500 km altitude |
| 20 | +/- 400 kHz | 0.002 % | -1.8 kHz/s | |
| 30 | +/- 600 kHz | 0.002 % | -2.7 kHz/s | |
| 2 | +/- 15 kHz | 0.00075 % | -6 Hz/s | MEO at 10000 km altitude |
| 20 | +/- 150 kHz | 0.00075 % | -60 Hz/s | |
| 30 | +/- 225 kHz | 0.00075 % | -90 Hz/s | |

In RAN#80, a new 3GPP Study Item (SI) "Solutions for NR to support Non-Terrestrial Networks" was agreed [1]. It is a continuation of a preceding SI "NR to support Non-Terrestrial Networks" (RP-171450), where the objective was to study the non-terrestrial network channel model, to define deployment scenarios and parameters, and to identify the key potential impacts on NR. The results are reflected in TR 38.811.

The objectives of the current SI are to evaluate solutions for the identified key impacts from the preceding SI and to study impacts on RAN protocols/architecture.

Hybrid Automatic Repeat Request (HARQ) protocol is one of the most important features in NR/LTE. Together with link adaptation through Channel State Information (CSI) feedback and HARQ Acknowledgement (ACK) / Negative Acknowledgement (NACK), HARQ enables efficient, reliable, and low delay data transmission in NR/LTE.

Existing HARQ procedures at the Physical (PHY) / Medium Access Control (MAC) layer have been designed for terrestrial networks where the RTT propagation delay is restricted to within 1 ms. With HARQ protocol, a transmitter needs to wait for the feedback from the receiver before sending new data. In the case of a NACK, the transmitter may need to resend the data packet. Otherwise, it may send new data. This Stop-and-Wait (SAW) procedure introduces inherent latency to the communication protocol, which may reduce the link throughput. To alleviate this issue, the existing HARQ procedure allows activating multiple HARQ processes at the transmitter. That is, the transmitter may initiate multiple transmissions in parallel without having to wait for a HARQ completion. For example, with 16 (8) HARQ processes in NR (LTE) downlink, the NR base station (gNB) (enhanced or evolved Node B (eNB)) may initiate up to 16 (8) new data transmissions without waiting for an ACK for the first packet transmission. Note that there are a sufficient number of HARQ processes for terrestrial networks where the propagation delay is typically less than 1 ms.

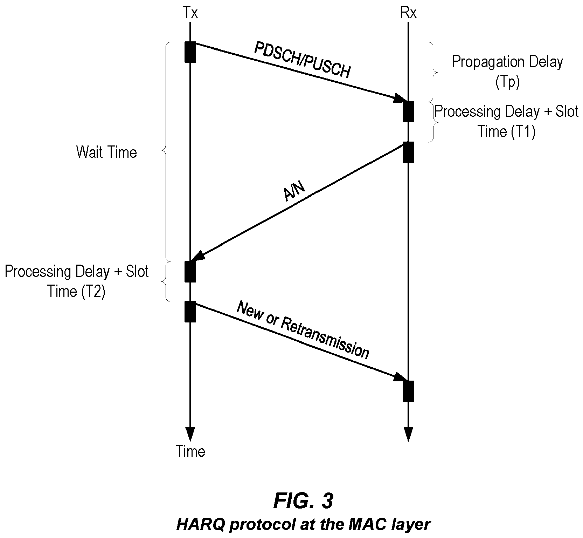

Figure 3 shows the various delays associated with the HARQ procedure:
1. The packet first reaches the receiver after a propagation delay Tp.
2. The receiver sends the feedback after a processing/slot delay T1.
3. The feedback reaches the data transmitter after a propagation delay Tp.
4. The transmitter may send a retransmission or new data after a processing/slot delay T2.
5. The required number of HARQ processes is (2Tp+ T1 + T2)/Ts where Ts refers to the slot duration in NR and the subframe duration in LTE.

There currently exist certain challenge(s). Existing HARQ procedures in LTE/NR have largely been designed for terrestrial networks where the propagation delay is typically limited to 1 ms. Thus, existing HARQ procedures in LTE/NR are not well suited for satellite-based networks.

### Summary

Systems and methods are disclosed herein for selectively deactivating (partially or fully) Hybrid Automatic Repeat Request (HARQ) mechanisms in a cellular communications system. Embodiments disclosed herein are particularly well-suited for adapting HARQ mechanisms for non-terrestrial radio access networks (e.g., satellite-based radio access networks). Embodiments of a method performed by a wireless device and corresponding embodiments of a wireless device are disclosed. In some embodiments, a method performed by a wireless device for deactivating HARQ mechanisms comprises receiving, from a base station, an explicit or implicit indication that HARQ mechanisms are at least partially deactivated for an uplink or downlink transmission. The method further comprises determining that HARQ mechanisms are at least partially deactivated for the transmission based on the indication and transmitting/receiving the transmission with HARQ mechanisms at least partially deactivated.

In some embodiments, the explicit or implicit indication is a HARQ process Identity (ID) associated with the transmission, where the HARQ process ID is predefined or preconfigured as a HARQ process ID for which HARQ mechanisms are at least partially deactivated. Further, in some embodiments, receiving the explicit or implicit indication that HARQ mechanisms are at least partially deactivated for the uplink or downlink transmission comprises receiving downlink control information that schedules the uplink or downlink transmission, where the downlink control information comprises the HARQ process ID for which HARQ mechanisms are at least partially deactivated.

In some embodiments, receiving the explicit or implicit indication that HARQ mechanisms are at least partially deactivated for the uplink or downlink transmission comprises receiving downlink control information that schedules the uplink or downlink transmission, the downlink control information comprising the indication. Further, in some embodiments, the indication is an explicit indication comprised in the downlink control information.

In some embodiments, HARQ mechanisms are partially deactivated, and the method further comprises sending, to the base station, a quantized version of Block Error Rate (BLER) statistics maintained by the wireless device.

In some embodiments, receiving the explicit or implicit indication that HARQ mechanisms are at least partially deactivated for the uplink or downlink transmission comprises receiving downlink control information that schedules the uplink or downlink transmission, where the downlink control information is scrambled with a particular radio network temporary identifier that serves as the indication that HARQ mechanisms are at least partially deactivated for the uplink or downlink transmission.

In some embodiments, the method further comprises receiving, via Medium Access Control (MAC) signaling, an indication of one or more HARQ processes for which HARQ mechanisms are at least partially disabled. Further, receiving the explicit or implicit indication that HARQ mechanisms are at least partially deactivated for the uplink or downlink transmission comprises receiving downlink control information that schedules the uplink or downlink transmission, the downlink control information comprising a HARQ ID that corresponds to one of the one or more HARQ processes for which HARQ mechanisms are at least partially disabled such that the HARQ ID serves as the indication that HARQ mechanisms are at least partially deactivated for the uplink or downlink transmission. Further, in some embodiments, receiving the indication of one or more HARQ processes for which HARQ mechanisms are at least partially disabled comprises receiving a MAC Control Element (CE) comprising, for each HARQ process of a plurality of HARQ processes, an indication of whether or not HARQ mechanisms are deactivated for the HARQ process. Further, in some embodiments, the method further comprises receiving, via MAC signaling, an indication to toggle the indications comprised in the MAC CE.

In some embodiments, receiving the explicit or implicit indication that HARQ mechanisms are at least partially deactivated for the uplink or downlink transmission comprises receiving an indication that the wireless device should not have a Physical Uplink Control Channel (PUCCH) resource for HARQ feedback, which serves as the indication that HARQ mechanisms for the uplink or downlink transmission are at least partially deactivated.

In some embodiments, receiving the explicit or implicit indication that HARQ mechanisms are at least partially deactivated for the uplink or downlink transmission comprises receiving downlink control information that schedules the uplink or downlink transmission, the downlink control information comprising a HARQ feedback timing indicator that is set to a value that serves as the indication that HARQ mechanisms for the uplink or downlink transmission are at least partially deactivated.

In some embodiments, the method further comprises receiving, from the base station, an indication of one or more HARQ processes for which HARQ mechanisms are activated. Further, receiving the explicit or implicit indication that HARQ mechanisms are at least partially deactivated for the uplink or downlink transmission comprises receiving downlink control information that schedules the uplink or downlink transmission, the downlink control information comprising a HARQ ID of a HARQ process other than the one or more HARQ processes for which HARQ mechanisms are activated that serves as the indication to at least partially disable HARQ mechanisms for the uplink or downlink transmission.

In some embodiments, the method further comprises receiving, from the base station, an indication to ignore a New Data Indicator (NDI) field of downlink control information for a specified set of HARQ processes. Further, receiving the explicit or implicit indication that HARQ mechanisms are at least partially deactivated for the uplink or downlink transmission comprises receiving downlink control information that schedules the uplink or downlink transmission, where the downlink control information comprises a HARQ ID that corresponds to one of the one or more HARQ processes in the specified set of HARQ processes and a NDI field. Still further, transmitting/receiving the transmission with HARQ mechanisms at least partially deactivated comprises transmitting/receiving the transmission while ignoring the NDI field of the downlink control information.

In some embodiments, the method further comprises receiving, from the base station, an indication to interpret a NDI field of downlink control information for a specified set of HARQ processes as an indication of whether or not HARQ mechanisms are at least partially deactivated. Further, receiving the explicit or implicit indication that HARQ mechanisms are at least partially deactivated for the uplink or downlink transmission comprises receiving downlink control information that schedules the uplink or downlink transmission, where the downlink control information comprises a HARQ ID that corresponds to one of the one or more HARQ processes in the specified set of HARQ processes and a NDI field that is set to a value that, when the NDI field is interpreted as an indication of whether or not HARQ mechanisms are at least partially deactivated, serves as the indication that HARQ mechanisms for the uplink or downlink transmission are at least partially deactivated.

In some embodiments, the base station is a base station of a satellite-based radio access network.

In some embodiments, transmitting/receiving the transmission with HARQ mechanisms at least partially deactivated comprises transmitting/receiving the transmission via a satellite link.

In some embodiments, a wireless device for deactivating HARQ mechanisms comprises one or more transmitters, one or more receivers, and processing circuitry associated with the one or more transmitters and the one or more receivers. The processing circuitry is configured to cause the wireless device to receive, from a base station, an explicit or implicit indication that HARQ mechanisms are at least partially deactivated for an uplink or downlink transmission. The processing circuitry is further configured to cause the wireless device to determine that HARQ mechanisms are at least partially deactivated for the transmission based on the indication and transmit/receive the transmission with HARQ mechanisms at least partially deactivated.

In some embodiments, a method performed by a wireless device for deactivating HARQ mechanisms comprises transmitting/receiving a data or control transmission to/from a base station on a logical channel that bypasses HARQ mechanisms. In some embodiments, the method further comprises receiving, from the base station, a configuration to use the logical channel that bypasses HARQ mechanisms. In some embodiments, the base station is a base station of a satellite-based radio access network. In some embodiments, transmitting/receiving the data or control transmission comprises transmitting/receiving the data or control transmission via a satellite link.

In some embodiments, a wireless device for deactivating HARQ mechanisms comprises one or more transmitters, one or more receivers, and processing circuitry associated with the one or more transmitters and the one or more receivers. The processing circuitry is configured to cause the wireless device to transmit/receive a data or control transmission to/from a base station on a logical channel that bypasses HARQ mechanisms.

Embodiments of a method performed by a base station and corresponding embodiments of a base station are also disclosed. In some embodiments, a method performed by a base station for deactivating HARQ mechanisms comprises transmitting, to a wireless device, an explicit or implicit indication that HARQ mechanisms are at least partially deactivated for an uplink or downlink transmission. The method further comprises transmitting/receiving the transmission with HARQ mechanisms at least partially deactivated.

In some embodiments, the explicit or implicit indication is a HARQ process ID associated with the transmission, where the HARQ process ID is predefined or preconfigured as a HARQ process ID for which HARQ mechanisms are at least partially deactivated. Further, in some embodiments, transmitting the explicit or implicit indication that HARQ mechanisms are at least partially deactivated for the uplink or downlink transmission comprises transmitting downlink control information that schedules the uplink or downlink transmission, where the downlink control information comprises the HARQ process ID for which HARQ mechanisms are at least partially deactivated.

In some embodiments, transmitting the explicit or implicit indication that HARQ mechanisms are at least partially deactivated for the uplink or downlink transmission comprises transmitting downlink control information that schedules the uplink or downlink transmission, where the downlink control information comprises the indication. In some embodiments, the indication is an explicit indication comprised in the downlink control information.

In some embodiments, HARQ mechanisms are partially deactivated, and the method further comprises receiving, from the wireless device, a quantized version of BLER statistics maintained by the wireless device.

In some embodiments, transmitting the explicit or implicit indication that HARQ mechanisms are at least partially deactivated for the uplink or downlink transmission comprises transmitting downlink control information that schedules the uplink or downlink transmission, where the downlink control information is scrambled with a particular radio network temporary identifier that serves as the indication that HARQ mechanisms are at least partially deactivated for the uplink or downlink transmission.

In some embodiments, the method further comprises transmitting, to the wireless device via MAC signaling, an indication of one or more HARQ processes for which HARQ mechanisms are at least partially disabled. Further, transmitting the explicit or implicit indication that HARQ mechanisms are at least partially deactivated for the uplink or downlink transmission comprises transmitting downlink control information that schedules the uplink or downlink transmission, where the downlink control information comprises a HARQ ID that corresponds to one of the one or more HARQ processes for which HARQ mechanisms are at least partially disabled such that the HARQ ID serves as the indication that HARQ mechanisms are at least partially deactivated for the uplink or downlink transmission. In some embodiments, transmitting the indication of one or more HARQ processes for which HARQ mechanisms are at least partially disabled comprises transmitting a MAC CE comprising, for each HARQ process of a plurality of HARQ processes, an indication of whether or not HARQ mechanisms are deactivated for the HARQ process. Further, in some embodiments, the method further comprises transmitting, via MAC signaling, an indication to toggle the indications comprised in the MAC CE.

In some embodiments, transmitting the explicit or implicit indication that HARQ mechanisms are at least partially deactivated for the uplink or downlink transmission comprises transmitting an indication that the wireless device should not have a PUCCH resource for HARQ feedback, which serves as the indication that HARQ mechanisms for the uplink or downlink transmission are at least partially deactivated.

In some embodiments, transmitting the explicit or implicit indication that HARQ mechanisms are at least partially deactivated for the uplink or downlink transmission comprises transmitting downlink control information that schedules the uplink or downlink transmission, where the downlink control information comprises a HARQ feedback timing indicator that is set to a value that serves as the indication that HARQ mechanisms for the uplink or downlink transmission are at least partially deactivated.

In some embodiments, the method further comprises transmitting, to the wireless device, an indication of one or more HARQ processes for which HARQ mechanisms are activated. Further, transmitting the explicit or implicit indication that HARQ mechanisms are at least partially deactivated for the uplink or downlink transmission comprises transmitting downlink control information that schedules the uplink or downlink transmission, where the downlink control information comprises a HARQ ID of a HARQ process other than the one or more HARQ processes for which HARQ mechanisms are activated that serves as the indication to at least partially disable HARQ mechanisms for the uplink or downlink transmission.

In some embodiments, the method further comprises transmitting, to the wireless device, an indication to ignore a NDI field of downlink control information for a specified set of HARQ processes. Further, transmitting the explicit or implicit indication that HARQ mechanisms are at least partially deactivated for the uplink or downlink transmission comprises transmitting downlink control information that schedules the uplink or downlink transmission, where the downlink control information comprises a HARQ ID that corresponds to one of the one or more HARQ processes in the specified set of HARQ processes and a NDI field. Still further, transmitting/receiving the transmission with HARQ mechanisms at least partially deactivated comprises transmitting/receiving the transmission in a manner in which the NDI field of the downlink control information is ignored by the wireless device.

In some embodiments, the method further comprises transmitting, to the wireless device, an indication to interpret a NDI field of downlink control information for a specified set of HARQ processes as an indication of whether or not HARQ mechanisms are at least partially deactivated. Further, transmitting the explicit or implicit indication that HARQ mechanisms are at least partially deactivated for the uplink or downlink transmission comprises transmitting downlink control information that schedules the uplink or downlink transmission, where the downlink control information comprises a HARQ ID that corresponds to one of the one or more HARQ processes in the specified set of HARQ processes and a NDI field that is set to a value that, when the NDI field is interpreted as an indication of whether or not HARQ mechanisms are at least partially deactivated, serves as the indication that HARQ mechanisms for the uplink or downlink transmission are at least partially deactivated.

In some embodiments, the base station is a base station of a satellite-based radio access network.

In some embodiments, transmitting/receiving the transmission with HARQ mechanisms at least partially deactivated comprises transmitting/receiving the transmission via a satellite link.

In some embodiments, a base station for deactivating HARQ mechanisms comprises processing circuitry configured to cause the base station to transmit, to a wireless device, an explicit or implicit indication that HARQ mechanisms are at least partially deactivated for an uplink or downlink transmission. The processing circuitry is further configured to cause the base station to transmit/receive the transmission with HARQ mechanisms at least partially deactivated.

In some embodiments, a method performed by a base station for deactivating HARQ mechanisms comprises transmitting/receiving a data or control transmission to/from a wireless device on a logical channel that bypasses HARQ mechanisms. In some embodiments, the method further comprises transmitting, to the wireless device, a configuration to use the logical channel that bypasses HARQ mechanisms. In some embodiments, the method further comprises determining that the logical channel that bypasses HARQ mechanisms should be used for the data or control transmission to/from the wireless device. In some embodiments, the base station is a base station of a satellite-based radio access network. In some embodiments, transmitting/receiving the data or control transmission comprises transmitting/receiving the data or control transmission via a satellite link.

In some embodiments, a base station for deactivating HARQ mechanisms comprises processing circuitry configured to cause the base station to transmit/receive a data or control transmission to/from a wireless device on a logical channel that bypasses HARQ mechanisms.

### Brief Description of the Drawings

The accompanying drawing figures incorporated in and forming a part of this specification illustrate several aspects of the disclosure, and together with the description serve to explain the principles of the disclosure.
Figure 1 shows an example architecture of a satellite network with bent pipe transponders;
Figure 2 illustrates the typical trajectory of a Geostationary Orbit (GEO) satellite;
Figure 3 illustrates various delays associated with the Hybrid Automatic Repeat Request (HARQ) procedure of Third Generation Partnership Project (3GPP) Long Term Evolution (LTE) and New Radio (NR);
Figure 4 illustrates one example of a satellite-based Radio Access Network (RAN) in which embodiments of the present disclosure may be implemented;
Figure 5 illustrates the operation of a base station and a User Equipment (UE) in accordance with at least some aspects of a first embodiment of the present disclosure (denoted herein as "Embodiment 1");
Figure 6 illustrates the operation of a base station and a UE in accordance with at least some aspects of a second embodiment of the present disclosure (denoted herein as "Embodiment 2a");
Figure 7 illustrates the operation of a base station and a UE in accordance with at least some aspects of a third embodiment of the present disclosure (denoted herein as "Embodiment 2c");
Figure 8 shows an example of the first octet in a Medium Access Control (MAC) Control Element (CE) where each bit corresponds to a HARQ process and indicates whether or not HARQ mechanisms (e.g., HARQ feedback) is enabled for the corresponding HARQ process in accordance with one aspect of a fourth embodiment of the present disclosure (denoted herein as "Embodiment 3a");
Figure 9 illustrates the operation of a base station and a UE in accordance with at least some aspects of the fourth embodiment of the present disclosure (denoted herein as "Embodiment 3a");
Figure 10 illustrates the operation of a base station and a UE in accordance with at least some aspects of a fifth embodiment of the present disclosure (denoted herein as "Embodiment 3b");
Figure 11 illustrates the operation of a base station and a UE in accordance with at least some aspects of a sixth embodiment of the present disclosure (denoted herein as "Embodiment 4");
Figure 12 illustrates the operation of a base station and a UE in accordance with at least some aspects of a seventh embodiment of the present disclosure (denoted herein as "Embodiment 5");
Figure 13 illustrates the operation of a base station and a UE in accordance with at least some other aspects of the seventh embodiment of the present disclosure (denoted herein as "Embodiment 5");
Figure 14 depicts the MAC structure from a UE perspective in which some logical control channels and/or some logical data channels can bypass HARQ mechanisms in accordance with an eighth embodiment of the present disclosure (denoted herein as "Embodiment 6");
Figure 15 illustrates the operation of a base station and a UE in accordance with at least some aspects of the eighth embodiment of the present disclosure (denoted herein as "Embodiment 6");
Figure 16 illustrates the operation of a base station and a UE in accordance with at least some aspects of a ninth embodiment of the present disclosure (denoted herein as "Embodiment 7a");
Figure 17 illustrates the operation of a base station and a UE in accordance with at least some aspects of a tenth embodiment of the present disclosure (denoted herein as "Embodiment 7b");
Figures 18 through 20 illustrate example embodiments of a radio access node;
Figures 21 and 22 illustrate example embodiments of a UE;
Figure 23 illustrates a communication system including a telecommunication network, which comprises an access network and a core network, in which embodiments of the present disclosure may be implemented;
Figure 24 illustrates example implementations, in accordance with an embodiment, of the UE, base station, and host computer of Figure 23; and
Figures 25 through 28 are flowcharts illustrating methods implemented in a communication system, in accordance with various embodiments.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless device.

**Radio Access Node:** As used herein, a "radio access node" or "radio network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), and a relay node.

**Core Network Node:** As used herein, a "core network node" is any type of node in a core network. Some examples of a core network node include, e.g., a Mobility Management Entity (MME), a Packet Data Network Gateway (P-GW), a Service Capability Exposure Function (SCEF), or the like.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell;" however, particularly with respect to 5G NR concepts, beams may be used instead of cells and, as such, it is important to note that the concepts described herein are equally applicable to both cells and beams.

In the following discussion, Hybrid Automatic Repeat Request (HARQ) protocol refers to the HARQ procedure at the Physical (PHY) / Medium Access Control (MAC) layer.

Existing HARQ procedures in LTE/NR have largely been designed for terrestrial networks where the propagation delay is typically limited to 1 millisecond (ms). The main issues with existing HARQ protocol amid large propagation delays will now be highlighted.
1. The existing HARQ mechanism may not be feasible when the propagation delay is much larger than that supported by the allowed number of HARQ processes. For example, consider the scenario where LTE downlink is to be adopted for satellite communications. For the Geostationary Orbit (GEO) case, the Round Trip Time (RTT) propagation delay can be around 500 ms. With eight HARQ processes, the eNB needs to wait for around 500 ms before sending new data. This translates to benefitting from only a meager fraction (8/500) of the available peak throughput. Even with sixteen HARQ processes supported in NR and with 1 ms slot duration, the available peak throughput as a percentage of the total channel capacity is very low. Table 5 summarizes the available peak throughput for a UE for Low Earth Orbiting (LEO), Medium Earth Orbiting (MEO), and GEO satellites. Therefore, without a sufficient number of HARQ processes, the sheer magnitude of the propagation delay may render closed-loop HARQ communication impractical.
2. The number of HARQ processes supported by the existing HARQ protocol is not sufficient to absorb the potentially large propagation delays in non-terrestrial networks. For example, Table 5 shows that a substantial increase in the existing number of HARQ processes (Release 15 NR supports a maximum of sixteen HARQ processes in uplink/downlink; LTE typically supports eight HARQ processes in uplink/downlink) is required for operating HARQ amid large propagation delays. Unfortunately, it is challenging to support that many HARQ processes, especially at the UE, due to the following reasons.
   a. It requires large memory at both the transmitter and receiver.
   b. It may require reducing the HARQ buffer size (and thus the maximum supported Transport Block Size (TBS)).
   c. A large number of HARQ buffers implies a large number of HARQ receivers.
   d. It may increase the signaling overhead for HARQ Identity (ID).

**Table 5 Required number of HARQ processes in satellite networks. The peak throughput with 16 HARQ processes and Ts =1 ms is also listed.**

| Satellite | Total delay | Reqd. # HARQ processes | Available peak throughput (% of peak capacity) |
|---|---|---|---|
| LEO | ~50 ms | ~50 | ~32% |
| MEO | ~ 180 ms | ~180 | ~8.9% |
| GEO | ~ 600 ms | ~600 | ~2.7% |

In short, the existing (PHY/MAC) HARQ mechanism is ill-suited to non-terrestrial networks with large propagation delays. Moreover, there is no existing signaling mechanism for disabling HARQ at the PHY/MAC layers. Therefore, new procedures are needed for adapting HARQ to non-terrestrial networks.

Certain aspects of the present disclosure and their embodiments may provide solutions to the aforementioned or other challenges. In this disclosure, systems and methods for dynamically configuring a HARQ procedure to account for large propagation delays are disclosed. In some embodiments, a node (e.g., eNB/gNB/UE) may configure transmissions with or without HARQ retransmissions or feedback in the connected mode.

In some embodiments, various signaling methodologies are utilized to support the functionality of dynamically deactivating HARQ mechanism at the PHY/MAC layer in the wake of large propagation delays.

Certain embodiments may provide one or more of the following technical advantage(s). Embodiments of the proposed solution introduce methods for dynamically enabling or disabling HARQ at the PHY/MAC layer in wake of large propagation delays. For example, in non-terrestrial networks where the propagation delay is large, activating the HARQ feedback loop may considerably reduce the throughput due to the inherent Stop-and-Wait (SAW) property of the HARQ protocol. With the ability to deactivate HARQ, the eNB/gNB/UE need not wait for the HARQ feedback or retransmissions before transmitting new data. Moreover, it helps save time, frequency, energy, and computational resources required for HARQ feedback transmission. With HARQ disabled, reliability will be provided by higher layers such as the Radio Link Control (RLC) layer.

In certain scenarios such as in poor channel conditions, it may also be desirable to operate with HARQ enabled in order to avoid aggressive retransmissions and increased latency at the higher layers. The proposed solution is dynamic in that it also includes this possibility.

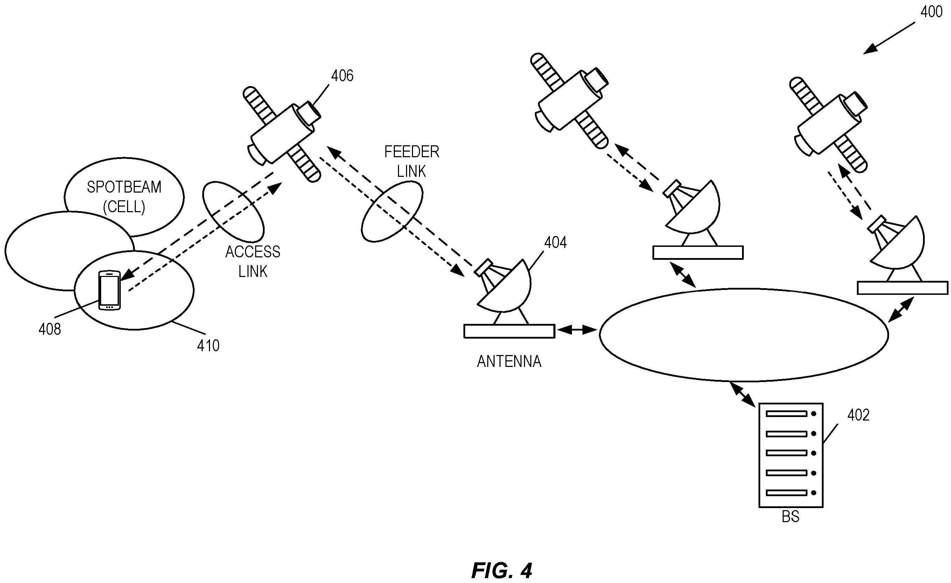

In this regard, Figure 4 illustrates one example of a satellite-based radio access network 400 in which embodiments of the present disclosure may be implemented. In some embodiments, the satellite-based radio access network 400 is a RAN for a cellular communications network such as, e.g., an LTE or NR network.

As illustrated, the satellite-based radio access network 400 includes, in this example, a base station 402 that connects the satellite-based radio access network 400 to a core network (not shown). In this example, the base station 402 is connected to a ground-based base station antenna 404 that is, in this example, remote from (i.e., not collocated with) the base station 402. The satellite-based radio access network 400 also includes a satellite 406, which is a space-borne platform, that provides a satellite-based access link to a UE 408 located in a respective spotbeam, or cell, 410.

The term "feeder link" refers to the link between the base station 402 (i.e., the ground-based base station antenna 404 in this example in which the base station 402 and the ground-based base station antenna 404 are not collocated) and the satellite 406. The term "service link" refers to the link between the satellite 406 and the UE 408. The link from the base station 402 to the UE 408 is often called the "forward link," and the link from the UE 408 to the base station 402 is often called the "return link" or "access link." Depending on the functionality of the satellite 406 in the satellite-based radio access network 400, two transponder options can be considered:
- Bent pipe transponder: the satellite forwards the received signal back to the earth with only amplification and a shift from uplink frequency to downlink frequency.
- Regenerative transponder: the satellite includes on-board processing to demodulate and decode the received signal and regenerate the signal before sending it back to the earth.

Several embodiments of a method for dynamically deactivating the HARQ mechanism at the PHY/MAC layer in wake of large propagation delays will now be described.

### Embodiment 1

In one embodiment, HARQ process IDs are used for signaling to the receiver that the HARQ mechanism is deactivated. That is, certain HARQ process IDs are defined which do not use any HARQ feedback or HARQ retransmissions. From the HARQ process ID, the receiver will implicitly know whether to transmit HARQ feedback, and/or to expect HARQ retransmission, and/or to store the received packet in HARQ buffer, and/or to perform other tasks related to HARQ feedback loop. There will be no HARQ retransmissions either.

Example: HARQ process number 0 is defined not to use any HARQ feedback or HARQ retransmission. As a result, the eNB/gNB/UE may use this HARQ process for sending data without any HARQ feedback and without any HARQ retransmissions. In case the transmitter desires to use HARQ feedback, the transmitter may transmit using other HARQ process IDs.

Example: In another example, a subset of HARQ processes can be defined not to use any HARQ feedback or HARQ retransmissions. As a result, the eNB/gNB/UE may use those HARQ processes for sending data without any HARQ feedback and without any HARQ retransmissions. For instance, multiple HARQ processes may be desirable considering the UE processing delay for processing an uplink grant and preparing data for uplink transmission. With a single HARQ process, the gNB/eNB may not send the uplink grant for that HARQ process continuously, thus reducing the resource utilization. Similar to the previous example, in case the transmitter desires to use HARQ feedback, the transmitter may transmit using other HARQ process IDs, if any.

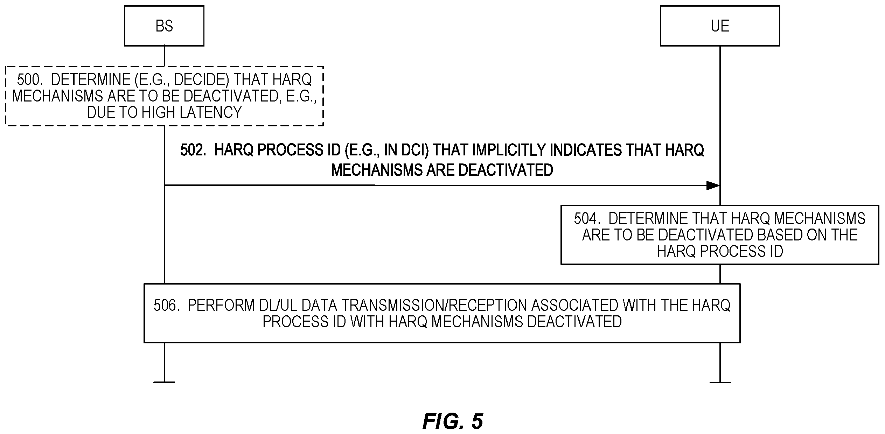

Figure 5 illustrates the operation of a base station (e.g., the base station 402) and a UE (e.g., the UE 408) in accordance with at least some aspects of Embodiment 1. Optional steps are represented by dashed lines/boxes. As illustrated, the base station determines that HARQ mechanisms are to be deactivated for downlink and/or uplink transmission to/from the UE, e.g., due to high latency (e.g., due to knowledge that the UE is accessing the network via a satellite link) (step 500). The base station sends a HARQ process ID to the UE (step 502). In some embodiments, the HARQ process ID is sent in Downlink Control Information (DCI) scheduling either a downlink transmission to the UE or an uplink transmission from the UE. The HARQ process ID is one of a set of HARQ process IDs that are predefined as not using HARQ mechanisms (i.e., HARQ process IDs that implicitly indicate that HARQ mechanisms are deactivated for the associated downlink/uplink transmission). The UE determines that HARQ mechanisms are deactivated based on the HARQ process ID (step 504). The base station and the UE then perform downlink/uplink transmission/reception of the corresponding data with HARQ mechanisms deactivated (step 506). For a downlink transmission, the base station transmits the data to the UE and the UE receives (attempts to receive) the data with HARQ mechanisms deactivated (e.g., without providing HARQ feedback and without receiving any HARQ retransmissions). For an uplink transmission, the UE transmits the data and the base station receives (attempts to receive) the data with HARQ mechanisms deactivated (e.g., without providing HARQ feedback and without receiving any HARQ retransmissions).

### Embodiment 2a

In one embodiment, a new DCI field or an existing DCI field is repurposed for signaling an indication (e.g., 1-bit information or 1 code-point in DCI encoding) to the receiver that indicates whether the HARQ mechanism is deactivated, e.g., for an associated transmission. By reading this DCI information, the UE will implicitly know whether to transmit HARQ feedback, and/or to expect HARQ retransmission, and/or to store the received packet in HARQ buffer, and/or to perform other tasks related to HARQ feedback loop. There will be no HARQ retransmissions either.

With this approach, all HARQ processes are available for use with or without the HARQ mechanism deactivated. This contrasts with the Embodiment 1, where the available number of HARQ processes is reduced due to association with HARQ and no HARQ mode.

Example: For delay-tolerant applications or when transmission reliability is the chief concern or in poor channel conditions, an eNB/gNB may leverage (new/repurposed) DCI fields to schedule a Physical Downlink Shared Channel (PDSCH) / Physical Uplink Shared Channel (PUSCH) transmission with HARQ enabled.

Example: When transmission latency or throughput is the chief concern or in good channel conditions, an eNB/gNB may leverage (new/repurposed) DCI fields to schedule a PDSCH/PUSCH transmission with HARQ disabled. The receiver will not send any feedback.

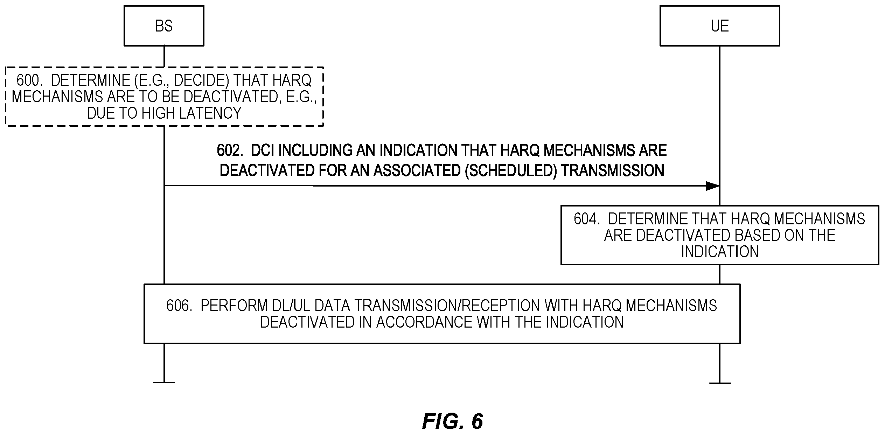

Figure 6 illustrates the operation of a base station (e.g., the base station 402) and a UE (e.g., the UE 408) in accordance with at least some aspects of Embodiment 2a. Optional steps are represented by dashed lines/boxes. As illustrated, the base station determines that HARQ mechanisms are to be deactivated for downlink and/or uplink transmission to/from the UE, e.g., due to high latency (e.g., due to knowledge that the UE is accessing the network via a satellite link) (step 600). The base station sends DCI to the UE to schedule an uplink or downlink transmission, where the DCI includes an indication (e.g., a 1-bit indicator) that indicates whether HARQ mechanisms are to be deactivated for the scheduled transmission (step 602). In this example, the indication indicates that HARQ mechanisms are deactivated. The UE determines that HARQ mechanisms are deactivated for the scheduled transmission based on the indication included in the DCI (step 604). The base station and the UE then perform the downlink/uplink transmission/reception of the corresponding data with HARQ mechanisms deactivated in accordance with the indication (step 606). For a downlink transmission, the base station transmits the data to the UE and the UE receives (attempts to receive) the data with HARQ mechanisms deactivated in accordance with the indication (e.g., without providing HARQ feedback and without receiving any HARQ retransmissions). For an uplink transmission, the UE transmits the data and the base station receives (attempts to receive) the data with HARQ mechanisms deactivated in accordance with the indication (e.g., without providing HARQ feedback and without receiving any HARQ retransmissions).

### Embodiment 2b

In another embodiment, the UE may only partially disable the HARQ feedback mechanism where it keeps track of the Block Error Rate (BLER) statistics for the HARQ processes and feeds back a quantized version of the BLER statistics instead. For example, the process of Figure 5 or Figure 6 may be modified such that HARQ mechanisms are only partially disabled (e.g., the UE keeps track of the BLER statistics for the HARQ processes and feeds back a quantized version of the BLER statistics instead).

Example: Instead of feeding back Acknowledgement (ACK) / Negative Acknowledgement (NACK), the UE may simply feedback whether or not its BLER has exceeded the target BLER. Alternatively, the UE may feedback a block error count or a quantized BLER using a Physical Uplink Control Channel (PUCCH) format carrying an Uplink Control Channel (UCI) payload having multiple bits. Such a feedback can be requested either periodically or dynamically through DCI.

When HARQ feedback is disabled, the eNB/gNB will have no knowledge of whether the allocated Modulation and Coding Scheme (MCS) is adequate. Such knowledge could help the eNB/gNB adjust its MCS allocation to achieve a certain desired error rate, e.g. BLER = 10⁻³. Thus, in some scenarios, the eNB/gNB may turn off HARQ retransmission for a HARQ process but may enable HARQ ACK/NACK feedback dynamically from time to time so that it can adjust its MCS allocation based on the feedback information, i.e., perform outer loop link adaptation.

### Embodiment 2c

In another embodiment, a new Radio Network Temporary Identifier (RNTI) is devised or an existing RNTI is repurposed for indicating to the UE whether HARQ feedback is disabled or not. For example, the process of Figure 5 or Figure 6 may be modified such that the indication that HARQ mechanisms are deactivated (partially or fully) is a particular RNTI or one of a particular set of RNTIs for which HARQ feedback is disabled (partially or fully).

Example: Use an existing RNTI such as "MCS-C-RNTI" for indicating the HARQ feedback mode. If the downlink assignment/uplink grant is scrambled with MCS-C-RNTI, it is likely used for a reliable transmission, suggesting that it relies less on HARQ feedback.

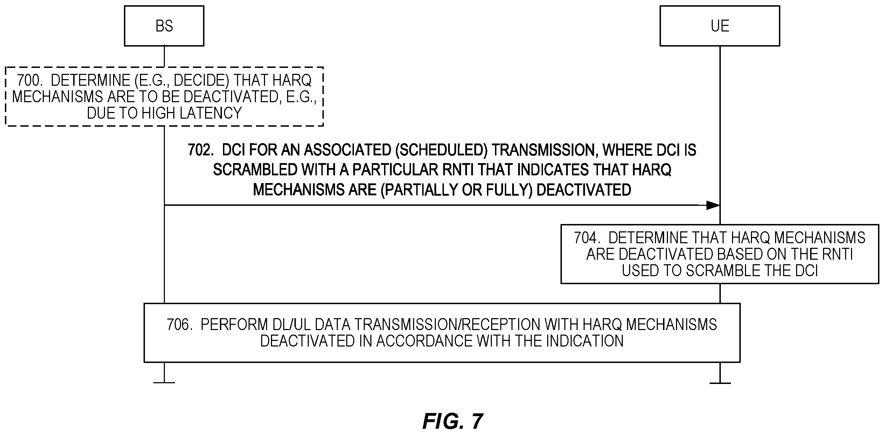

Figure 7 illustrates the operation of a base station (e.g., the base station 402) and a UE (e.g., the UE 408) in accordance with at least some aspects of Embodiment 2c. Optional steps are represented by dashed lines/boxes. As illustrated, the base station determines that HARQ mechanisms are to be deactivated for downlink and/or uplink transmission to/from the UE, e.g., due to high latency (e.g., due to knowledge that the UE is accessing the network via a satellite link) (step 700). The base station sends DCI to the UE to schedule an uplink or downlink transmission, where the DCI is scrambled with a particular RNTI that indicates that HARQ mechanisms are to be (partially or fully) deactivated for the scheduled transmission (step 702). The UE determines that HARQ mechanisms are deactivated for the scheduled transmission based on the RNTI used to scramble the DCI (step 704). The base station and the UE then perform the downlink/uplink transmission/reception of the corresponding data with HARQ mechanisms deactivated in accordance with the indication (step 706). For a downlink transmission, the base station transmits the data to the UE and the UE receives (attempts to receive) the data with HARQ mechanisms deactivated in accordance with the indication (e.g., without providing HARQ feedback and without receiving any HARQ retransmissions). For an uplink transmission, the UE transmits the data and the base station receives (attempts to receive) the data with HARQ mechanisms deactivated in accordance with the indication (e.g., without providing HARQ feedback and without receiving any HARQ retransmissions).

### Embodiment 3a

In some embodiments, a MAC Control Element (CE) is used to indicate to the UE which HARQ processes have HARQ feedback enabled or disabled.

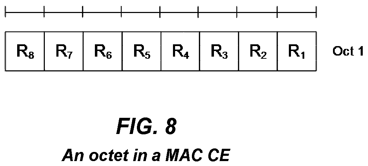

Figure 8 shows an example of the first octet in a MAC CE where each bit corresponds to a HARQ process. If the corresponding bit is 1, HARQ feedback is enabled for that process. Otherwise, it is disabled.

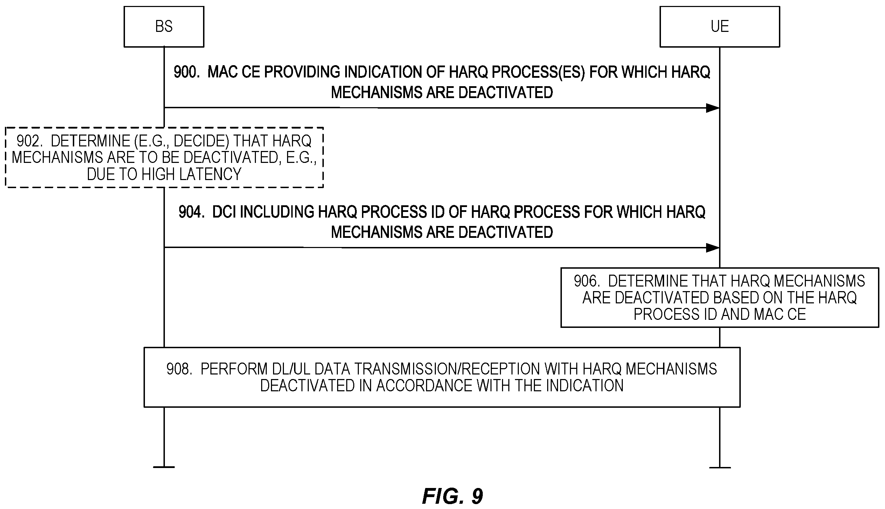

Figure 9 illustrates the operation of a base station (e.g., the base station 402) and a UE (e.g., the UE 408) in accordance with at least some aspects of Embodiment 3a. Optional steps are represented by dashed lines/boxes. As illustrated, the base station sends a MAC CE to the UE that indicates HARQ process(es) for which HARQ mechanisms are deactivated (900). The base station determines that HARQ mechanisms are to be deactivated for downlink and/or uplink transmission to/from the UE, e.g., due to high latency (e.g., due to knowledge that the UE is accessing the network via a satellite link) (step 902). The base station sends DCI to the UE to schedule an uplink or downlink transmission, where the DCI includes a HARQ process ID for the transmission where the HARQ process ID is that of a HARQ process indicated in the MAC CE as having HARQ mechanisms deactivated (step 904). The UE determines that HARQ mechanisms are deactivated for the scheduled transmission based on the HARQ process ID and the MAC CE (step 906). The base station and the UE then perform the downlink/uplink transmission/reception of the corresponding data with HARQ mechanisms deactivated in accordance with the indication (step 908). For a downlink transmission, the base station transmits the data to the UE and the UE receives (attempts to receive) the data with HARQ mechanisms deactivated in accordance with the indication. For an uplink transmission, the UE transmits the data and the base station receives (attempts to receive) the data with HARQ mechanisms deactivated in accordance with the indication.

### Embodiment 3b

In some embodiments, the MAC CE (e.g., the MAC CE of Embodiment 3a) has a fixed payload size of zero bits and the MAC CE is identified by a specific header. It indicates to the UE a toggle of the configuration for the HARQ feedback for all HARQ processes, i.e., if the HARQ feedback is disabled, then this MAC CE indicates that the HARQ feedback shall be enabled and, if the HARQ feedback is enabled, then this MAC CE indicates that the HARQ feedback shall be disabled.

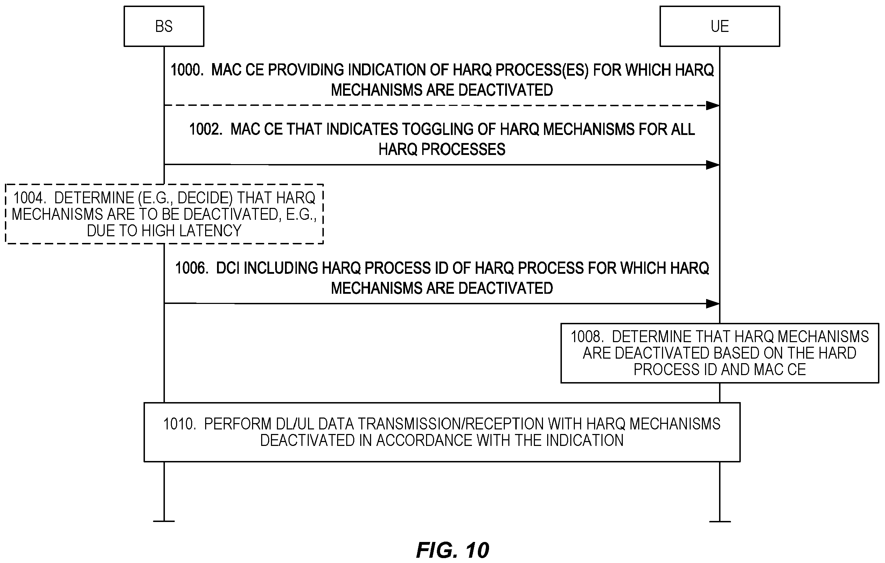

Figure 10 illustrates the operation of a base station (e.g., the base station 402) and a UE (e.g., the UE 408) in accordance with at least some aspects of Embodiment 3b. Optional steps are represented by dashed lines/boxes. As illustrated, the base station sends a MAC CE to the UE that indicates HARQ process(es) for which HARQ mechanisms are deactivated (step 1000). Sometime thereafter, the base station sends a MAC CE that indicates toggling of HARQ feedback mechanisms for all HARQ processes, as described above for Embodiment 3b (step 1002). The base station determines that HARQ mechanisms are to be deactivated for downlink and/or uplink transmission to/from the UE, e.g., due to high latency (e.g., due to knowledge that the UE is accessing the network via a satellite link) (step 1004). The base station sends DCI to the UE to schedule an uplink or downlink transmission, where the DCI includes a HARQ process ID for the transmission where the HARQ process ID is that of a HARQ process indicated in the MAC CE as having HARQ mechanisms deactivated (step 1006). The UE determines that HARQ mechanisms are deactivated for the scheduled transmission based on the HARQ process ID and the MAC CE (step 1008). The base station and the UE then perform the downlink/uplink transmission/reception of the corresponding data with HARQ mechanisms deactivated in accordance with the indication (step 1010). For a downlink transmission, the base station transmits the data to the UE and the UE receives (attempts to receive) the data with HARQ mechanisms deactivated in accordance with the indication. For an uplink transmission, the UE transmits the data and the base station receives (attempts to receive) the data with HARQ mechanisms deactivated in accordance with the indication.

### Embodiment 4

In one embodiment, Radio Resource Control (RRC) signaling is used to indicate that a UE should not have a PUCCH resource for HARQ feedback. This serves as an implicit indication to the UE that HARQ mechanisms are deactivated.

Example: Similar to Embodiment 1 and Embodiment 2, the UE will know that the HARQ mechanism is disabled as there is no PUCCH resource configured for it.

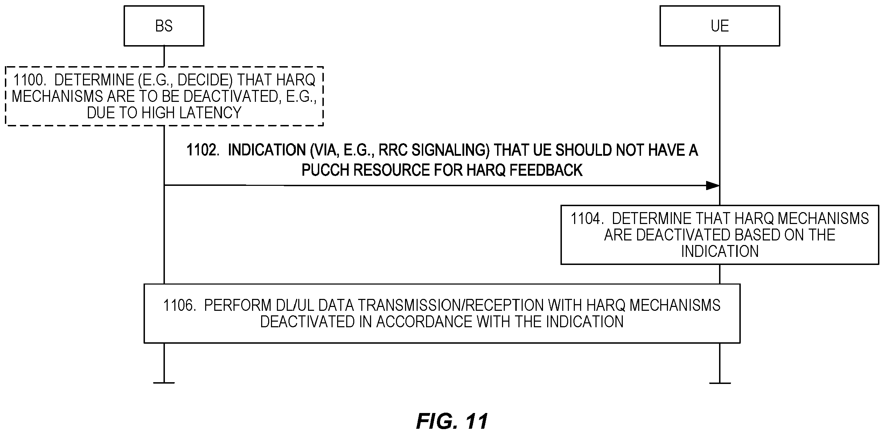

Figure 11 illustrates the operation of a base station (e.g., the base station 402) and a UE (e.g., the UE 408) in accordance with at least some aspects of Embodiment 4. Optional steps are represented by dashed lines/boxes. As illustrated, the base station determines that HARQ mechanisms are to be deactivated for downlink and/or uplink transmission to/from the UE, e.g., due to high latency (e.g., due to knowledge that the UE is accessing the network via a satellite link) (step 1100). The base station sends an indication to the UE, e.g., via RRC signaling, that the UE should not have a PUCCH resource for HARQ feedback (step 1102). The UE determines that HARQ mechanisms are deactivated based on the indication (step 1104). The base station and the UE then perform downlink/uplink transmission/reception of the corresponding data with HARQ mechanisms deactivated (step 1106). For a downlink transmission, the base station transmits the data to the UE and the UE receives (attempts to receive) the data with HARQ mechanisms deactivated. For an uplink transmission, the UE transmits the data and the base station receives (attempts to receive) the data with HARQ mechanisms deactivated.

### Embodiment 5

In some embodiments, RRC signaling is enabled to devise a null resource in the DCI field *HARQ-feedback timing indicator.* If this null resource is configured in the DCI, then UE shall not reply with HARQ feedback. Alternatively, the dedicated RRC signaling can be used to configure the UE with the HARQ processes for which HARQ feedback is enabled. This UE-specific configuration would be applicable for UEs in RRC_CONNECTED mode and could be modified or terminated via RRC reconfiguration.

Example: RRC signaling may declare the *HARQ-feedback timing indicator* value 0 as the null-resource. This means that if UE receives this value, HARQ feedback is disabled.

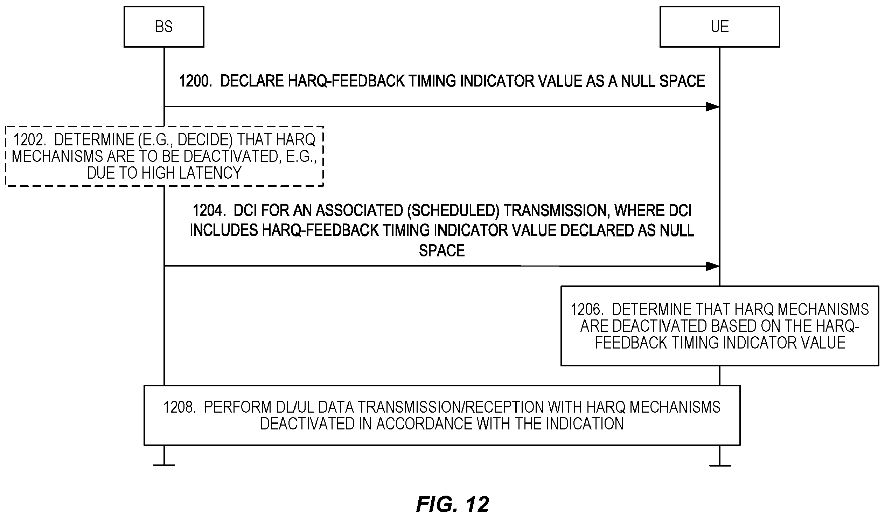

Figure 12 illustrates the operation of a base station (e.g., the base station 402) and a UE (e.g., the UE 408) in accordance with at least some aspects of Embodiment 5. Optional steps are represented by dashed lines/boxes. As illustrated, the base station sends an RRC message to the UE that declares a particular *HARQ-feedback timing indicator* value (e.g., 0) as a null space (step 1200). The base station determines that HARQ mechanisms are to be deactivated for downlink and/or uplink transmission to/from the UE, e.g., due to high latency (e.g., due to knowledge that the UE is accessing the network via a satellite link) (step 1202). The base station sends DCI to the UE to schedule an uplink or downlink transmission, where the DCI includes the *HARQ-feedback timing indicator value* that has been declared as a null space, thereby indicating that HARQ mechanisms are to be (partially or fully) deactivated for the scheduled transmission (step 1204). The UE determines that HARQ mechanisms are deactivated for the scheduled transmission based on the *HARQ-feedback timing indicator* value (step 1206). The base station and the UE then perform the downlink/uplink transmission/reception of the corresponding data with HARQ mechanisms deactivated in accordance with the indication (step 1208). For a downlink transmission, the base station transmits the data to the UE and the UE receives (attempts to receive) the data with HARQ mechanisms deactivated in accordance with the indication (e.g., without providing HARQ feedback and without receiving any HARQ retransmissions). For an uplink transmission, the UE transmits the data and the base station receives (attempts to receive) the data with HARQ mechanisms deactivated in accordance with the indication (e.g., without providing HARQ feedback and without receiving any HARQ retransmissions).

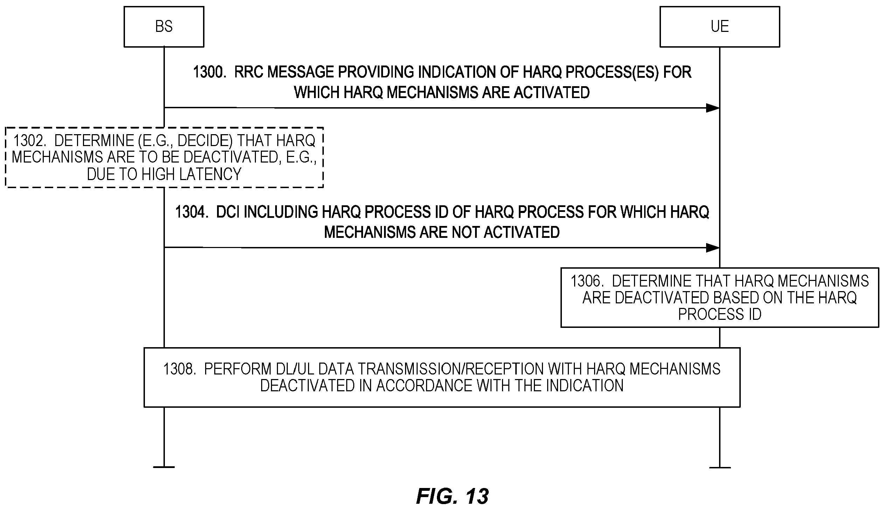

Figure 13 illustrates the operation of a base station (e.g., the base station 402) and a UE (e.g., the UE 408) in accordance with at least some aspects of Embodiment 5. Optional steps are represented by dashed lines/boxes. As illustrated, the base station sends an RRC message to the UE that indicates HARQ process(es) for which HARQ mechanisms are activated (step 1300). The base station determines that HARQ mechanisms are to be deactivated for downlink and/or uplink transmission to/from the UE, e.g., due to high latency (e.g., due to knowledge that the UE is accessing the network via a satellite link) (step 1302). The base station sends DCI to the UE to schedule an uplink or downlink transmission, where the DCI includes a HARQ process ID for the transmission where the HARQ process ID is that of a HARQ process other than those indicated in the RRC message as having HARQ mechanisms activated (step 1304). The UE determines that HARQ mechanisms are deactivated for the scheduled transmission based on the HARQ process ID and the RRC message of step 1300 (step 1306). The base station and the UE then perform the downlink/uplink transmission/reception of the corresponding data with HARQ mechanisms deactivated in accordance with the indication (step 1308). For a downlink transmission, the base station transmits the data to the UE and the UE receives (attempts to receive) the data with HARQ mechanisms deactivated in accordance with the indication. For an uplink transmission, the UE transmits the data and the base station receives (attempts to receive) the data with HARQ mechanisms deactivated in accordance with the indication.

### Embodiment 6

In one embodiment, a new logical channel is used to bypass the PHY/MAC HARQ loop in RRC_CONNECTED mode. With this approach, higher layers will indicate to lower layers that the HARQ mechanism is disabled.

When the UE is configured with the mentioned logical channel, the HARQ mechanism can be avoided altogether.

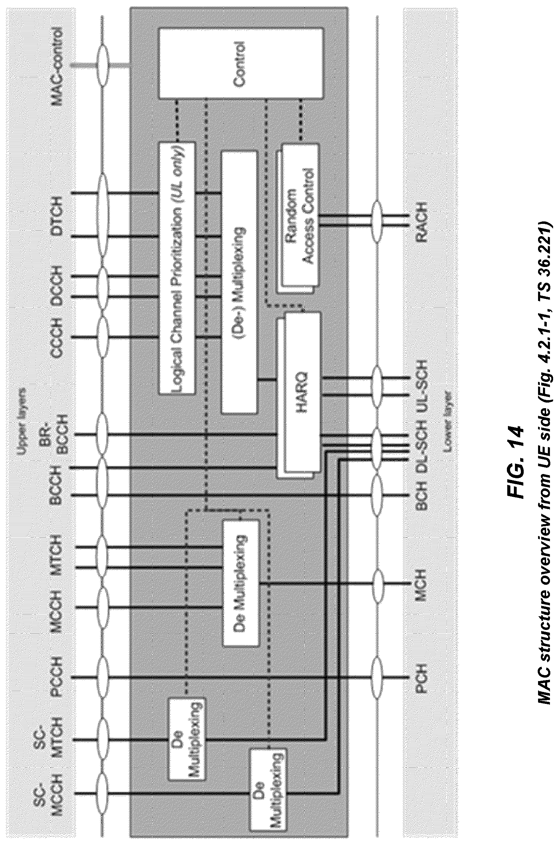

Example: Figure 14 depicts the MAC structure from a UE perspective. It shows how logical channels are mapped to transport channels. As an example, consider the logical channels Single Cell Multicast Control Channel (SC-MCCH) / Single Cell Multicast Traffic Channel (SC-MTCH) defined for Single Cell Point to Multipoint (SC-PTM) multicast feature in RRC_IDLE mode. To disable HARQ feedback, these logical channels are mapped to the DL_SCH channel without involving the MAC HARQ procedure. Similarly, new logical control/data channels can be defined without HARQ support for RRC_CONNECTED mode. A connection established with such a logical channel will operate without any HARQ feedback.

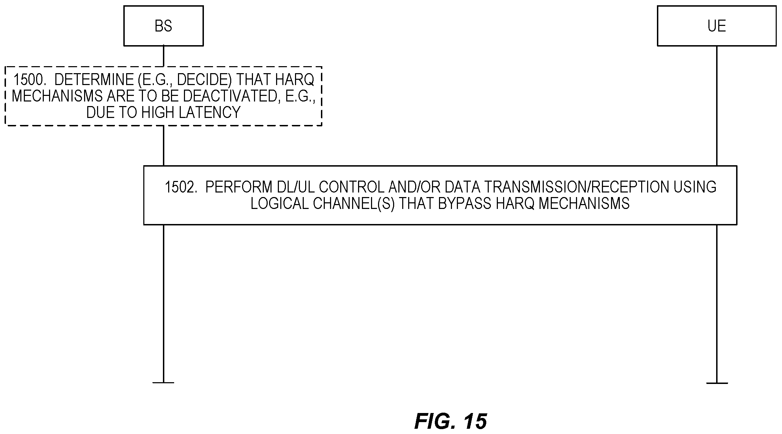

Figure 15 illustrates the operation of a base station (e.g., the base station 402) and a UE (e.g., the UE 408) in accordance with at least some aspects of Embodiment 6. Optional steps are represented by dashed lines/boxes. As illustrated, the base station determines that HARQ mechanisms are to be deactivated for downlink and/or uplink transmission to/from the UE, e.g., due to high latency (e.g., due to knowledge that the UE is accessing the network via a satellite link) (step 1500). The base station and the UE perform downlink/uplink data and/or control transmission/reception using a logical channel(s) that bypass HARQ mechanisms (step 1502). Note that, in some embodiments, the base station configures the UE to use the logical channel(s) that bypass HARQ mechanisms. This configuration may be made using any appropriate mechanism. Alternatively, the UE may decide on its own to use the logical channel(s) that bypass HARQ mechanisms, e.g., based on any knowledge that it has that indicates that it is accessing the network via a satellite link.

### Embodiment 7a

In some embodiments, a new RRC signaling is introduced to inform the UE to ignore the New Data Indicator (NDI) field in DCI for a specified set of HARQ process IDs. This is because the NDI field may be redundant when HARQ is disabled on a HARQ process as there are no HARQ retransmissions. In this case, regardless of the HARQ feedback value which might be sent or not, no retransmission will occur.

Example: In the NR fallback mode, the DCI fields are static and cannot be changed dynamically. By introducing the suggested RRC signaling, the NDI bit may be repurposed.

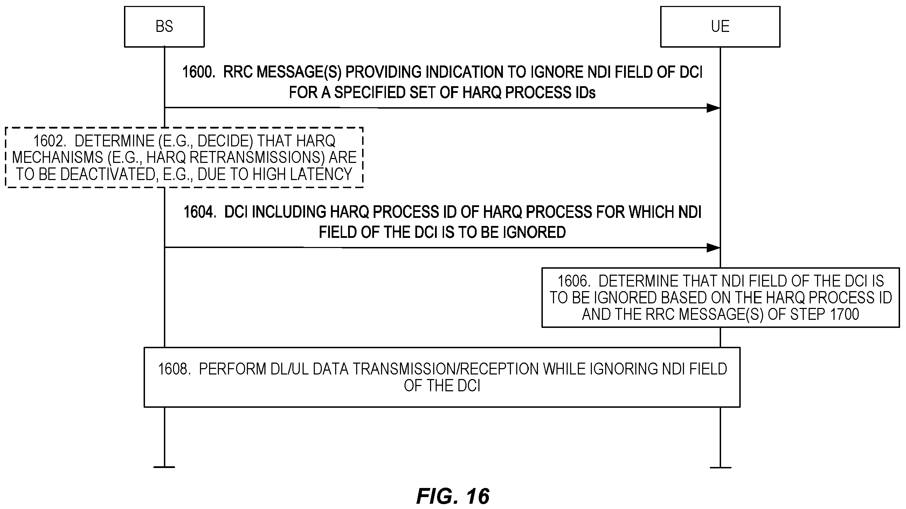

Figure 16 illustrates the operation of a base station (e.g., the base station 402) and a UE (e.g., the UE 408) in accordance with at least some aspects of Embodiment 7a. Optional steps are represented by dashed lines/boxes. As illustrated, the base station sends an RRC message(s) to the UE that indicates that the NDI field of DCI is to be ignored for a specified set of HARQ process IDs (step 1600). The base station determines that HARQ mechanisms (e.g., HARQ retransmissions) are to be deactivated for downlink and/or uplink transmission to/from the UE, e.g., due to high latency (e.g., due to knowledge that the UE is accessing the network via a satellite link) (step 1602). The base station sends DCI to the UE to schedule an uplink or downlink transmission, where the DCI includes a HARQ process ID for the transmission where the HARQ process ID is that of a HARQ process for which the NDI field of the DCI is to be ignored (step 1604). The UE determines that the NDI field of the DCI is to be ignored based on the HARQ process ID contained in the DCI and the RRC message(s) of step 1600 (step 1606). The base station and the UE then perform the downlink/uplink transmission/reception of the corresponding data while ignoring the NDI field of the DCI (step 1608).

### Embodiment 7b

In some embodiments, new RRC signaling is introduced to inform the UE to interpret the NDI field in DCI for a specified set of HARQ process IDs in a different way. With this interpretation, the NDI bit indicates whether or not the UE shall transmit HARQ feedback for the associated block. In this case, regardless of HARQ feedback value which might be sent or not, no retransmission will occur.

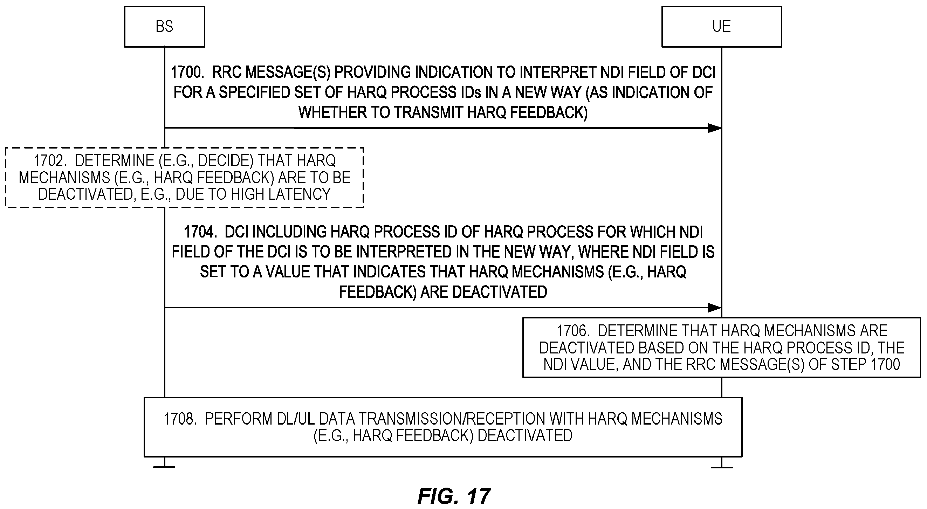

Figure 17 illustrates the operation of a base station (e.g., the base station 402) and a UE (e.g., the UE 408) in accordance with at least some aspects of Embodiment 7B. Optional steps are represented by dashed lines/boxes. As illustrated, the base station sends a RRC message(s) to the UE that indicates that the NDI field of DCI is to be interpreted in a new way for a specified set of HARQ process IDs (step 1700). As discussed above, this new way of interpreting the NDI is to interpret the NDI as an indication of whether or not HARQ mechanisms are deactivated for the corresponding scheduled transmission (e.g., whether or not the UE is to transmit HARQ feedback). The base station determines that HARQ mechanisms (e.g., HARQ feedback) are to be deactivated for downlink and/or uplink transmission to/from the UE, e.g., due to high latency (e.g., due to knowledge that the UE is accessing the network via a satellite link) (step 1702). The base station sends DCI to the UE to schedule an uplink or downlink transmission, where the DCI includes a HARQ process ID for the transmission where the HARQ process ID is that of a HARQ process for which the NDI field of the DCI is to be interpreted in the new way (step 1704). In this example, the NDI field of the DCI is set to a value that indicates that HARQ mechanisms (e.g., HARQ feedback) are deactivated. The UE determines that HARQ mechanisms (e.g., HARQ feedback) are deactivated based on the HARQ process ID contained in the DCI, the value of the NDI in the DCI, and the RRC message(s) of step 1700 (step 1706). The base station and the UE then perform the downlink/uplink transmission/reception of the corresponding data with HARQ mechanisms (e.g., HARQ feedback) deactivated (step 1708).

### Embodiment 8

In some embodiments, the Packet Data Convergence Protocol (PDCP) layer can be configured to provide integrity protection of the data layer to detect bit modifications introduced on the physical layer. In one embodiment, this detection mechanism is used to detect bit and block errors not captured by lower layers (e.g., HARQ and RLC). The PDCP functionality can be enhanced to request retransmissions of erroneously received blocks to improve the link robustness. The PDPC Message Authentication code (MAC-I) is a four byte word calculated based on the PDCP PDU at the transmitting node, and is appended to the end of the PDCP PDU. It is similar in its function to the CRC appended to a transport block, with the important difference that a secret key is used in the calculations meaning that only the intended receiver can verify the MAC-I (while any receiver including interceptors can calculate the PHY CRC). The receiving node verifies the correctness of the received PDCP PDU by the calculation of the MAC-X four byte word, and verifies that the MAC-X corresponds to the MAC-I. If a bit in the transmitted PDU has been changed during the transmission, then MAC-X and MAC-I will not correspond and the receiving node can be said to have detected a bit error.

### Embodiment 9

In some embodiments, the lack of HARQ feedback is compensated for through increased redundancy. The idea of HARQ retransmissions is to lower the residual error probability without the cost of operating at high initial BLER (expensive in terms of output power, caused interference, etc.). Removing the possibility of HARQ retransmissions will result in even more time consuming RLC, or even Transmission Control Protocol (TCP) retransmissions. The large RTT propagation delay (~500 ms) for non-terrestrial communications allows for increased redundancy to compensate for this. That is, the transmitter is likely already operating at maximum output power but Transmit Time Interval (TTI) bundling or time repetition, reduced code rate, etc. could be applied to lower the initial BLER. Such techniques can be used in, e.g., step 506 of Figure 5, step 606 of Figure 6, step 706 of Figure 7, step 908 of Figure 9, step 1010 of Figure 10, step 1106 of Figure 11, step 1208 of Figure 12, step 1308 of Figure 13, step 1502 of Figure 15, step 1608 of Figure 16, and/or step 1708 of Figure 17. Since, as described above, the UE cannot in practical cases support hundreds of HARQ processes to fully utilize all the time slots with such a large RTT propagation delay, there is no significant drawback in additional latency for time repetition or TTI bundling.

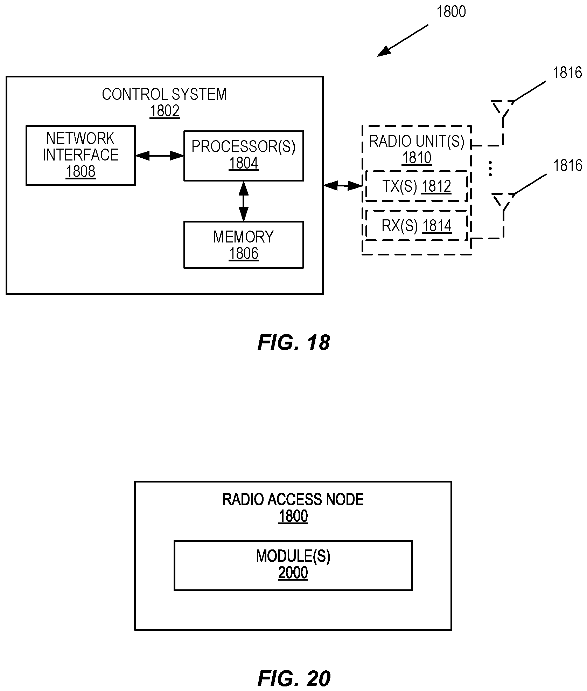

Figure 18 is a schematic block diagram of a radio access node 1800 according to some embodiments of the present disclosure. The radio access node 1800 may be, for example, the base station 402 or the combination of the base station 402 and the ground-based base station antenna 404 described above. As illustrated, the radio access node 1800 includes a control system 1802 that includes one or more processors 1804 (e.g., Central Processing Units (CPUs), Application Specific Integrated Circuits (ASICs), Field Programmable Gate Arrays (FPGAs), and/or the like), memory 1806, and a network interface 1808. The one or more processors 1804 are also referred to herein as processing circuitry. In addition, in some embodiments, the radio access node 1800 includes one or more radio units 1810 that each includes one or more transmitters 1812 and one or more receivers 1814 coupled to one or more antennas 1816. The radio units 1810 may be referred to or be part of radio interface circuitry. In some embodiments, the radio unit(s) 1810 is external to the control system 1802 and connected to the control system 1802 via, e.g., a wired connection (e.g., an optical cable). For example, the control system 1802 may be implemented in the base station 402, and the radio unit(s) 1810 and antennas 1816 may be implemented in the ground-based base station antenna 404. However, in some other embodiments, the radio unit(s) 1810 and potentially the antenna(s) 1816 are integrated together with the control system 1802. The one or more processors 1804 operate to provide one or more functions of a radio access node 1800 (e.g., one or more functions of the base station, eNB, or gNB) as described herein. In some embodiments, the function(s) are implemented in software that is stored, e.g., in the memory 1806 and executed by the one or more processors 1804.

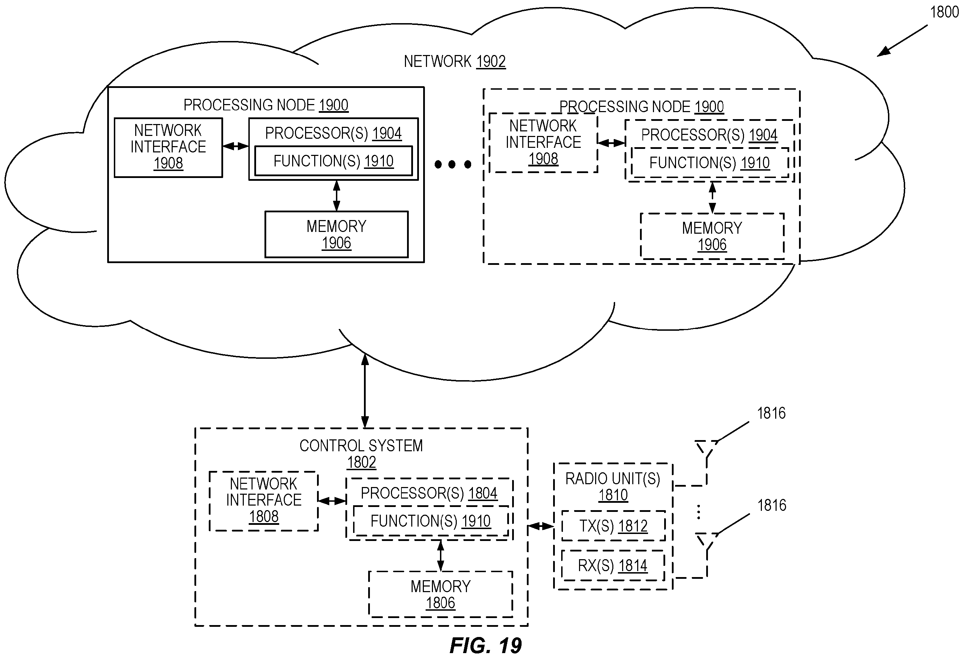

Figure 19 is a schematic block diagram that illustrates a virtualized embodiment of the radio access node 1800 according to some embodiments of the present disclosure. This discussion is equally applicable to other types of network nodes. Further, other types of network nodes may have similar virtualized architectures.

As used herein, a "virtualized" radio access node is an implementation of the radio access node 1800 in which at least a portion of the functionality of the radio access node 1800 is implemented as a virtual component(s) (e.g., via a virtual machine(s) executing on a physical processing node(s) in a network(s)). As illustrated, in this example, the radio access node 1800 includes one or more processing nodes 1900 coupled to or included as part of a network(s) 1902 via the network interface 1808. Each processing node 1900 includes one or more processors 1904 (e.g., CPUs, ASICs, FPGAs, and/or the like), memory 1906, and a network interface 1908. Optionally, the radio access node 1800 includes the control system 1802 and/or the radio unit(s) 1810, depending on the particular implementation.

In this example, functions 1910 of the radio access node 1800 described herein (e.g., functions of the base station, eNB, or gNB described herein) are implemented at the one or more processing nodes 1900 or distributed across the control system 1802 and the one or more processing nodes 1900 in any desired manner. In some particular embodiments, some or all of the functions 1910 of the radio access node 1800 described herein are implemented as virtual components executed by one or more virtual machines implemented in a virtual environment(s) hosted by the processing node(s) 1900. Notably, in some embodiments, the control system 1802 may not be included, in which case the radio unit(s) 1810 can communicate directly with the processing node(s) 1900 via an appropriate network interface(s).

In some embodiments, a computer program including instructions which, when executed by at least one processor, causes the at least one processor to carry out the functionality of radio access node 1800 or a node (e.g., a processing node 1900) implementing one or more of the functions 1910 of the radio access node 1800 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 20 is a schematic block diagram of the radio access node 1800 according to some other embodiments of the present disclosure. The radio access node 1800 includes one or more modules 2000, each of which is implemented in software. The module(s) 2000 provide the functionality of the radio access node 1800 described herein. This discussion is equally applicable to the processing node 1900 of Figure 19 where the modules 2000 may be implemented at one of the processing nodes 1900 or distributed across multiple processing nodes 1900 and/or distributed across the processing node(s) 1900 and the control system 1802.

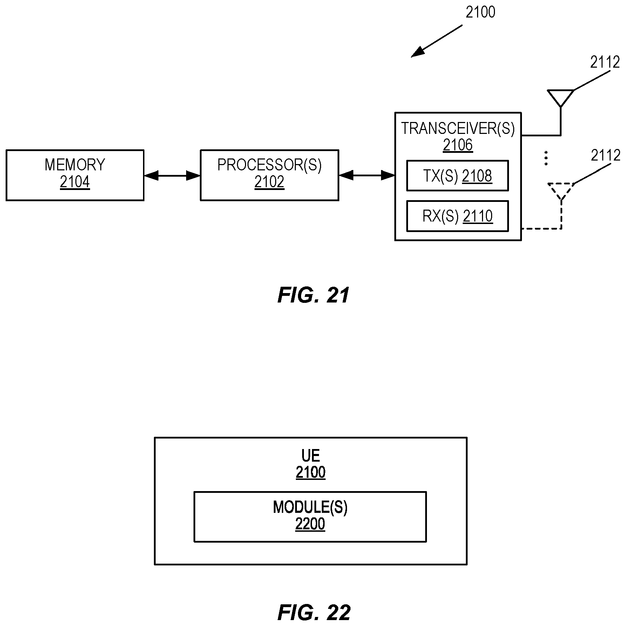

Figure 21 is a schematic block diagram of a UE 2100 according to some embodiments of the present disclosure. As illustrated, the UE 2100 includes one or more processors 2102 (e.g., CPUs, ASICs, FPGAs, and/or the like), memory 2104, and one or more transceivers 2106 each including one or more transmitters 2108 and one or more receivers 2110 coupled to one or more antennas 2112. The transceiver(s) 2106 includes radio-front end circuitry connected to the antenna(s) 2112 that is configured to condition signals communicated between the antenna(s) 2112 and the processor(s) 2102, as will be appreciated by on of ordinary skill in the art. The processors 2102 are also referred to herein as processing circuitry. The transceivers 2106 are also referred to herein as radio circuitry. In some embodiments, the functionality of the UE 2100 (i.e., the functionality of the UE) described above may be fully or partially implemented in software that is, e.g., stored in the memory 2104 and executed by the processor(s) 2102. Note that the UE 2100 may include additional components not illustrated in Figure 21 such as, e.g., one or more user interface components (e.g., an input/output interface including a display, buttons, a touch screen, a microphone, a speaker(s), and/or the like and/or any other components for allowing input of information into the UE 2100 and/or allowing output of information from the UE 2100), a power supply (e.g., a battery and associated power circuitry), etc.

In some embodiments, a computer program including instructions which, when executed by at least one processor, causes the at least one processor to carry out the functionality of the UE 2100 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 22 is a schematic block diagram of the UE 2100 according to some other embodiments of the present disclosure. The UE 2100 includes one or more modules 2200, each of which is implemented in software. The module(s) 2200 provide the functionality of the UE 2100 described herein.

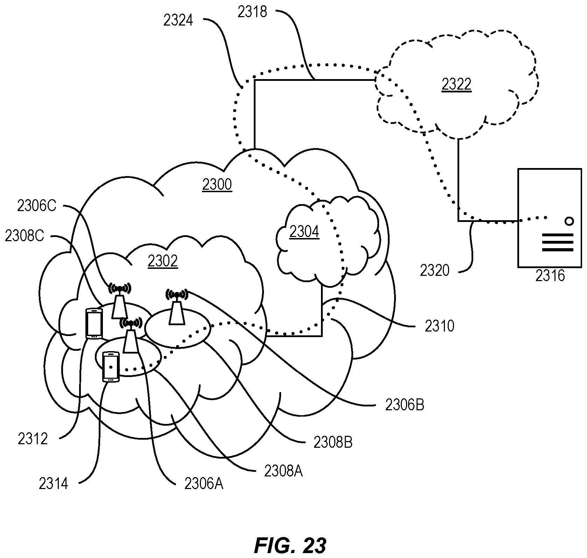

With reference to Figure 23, in accordance with an embodiment, a communication system includes a telecommunication network 2300, such as a 3GPP-type cellular network, which comprises an access network 2302, such as a RAN, and a core network 2304. The access network 2302 comprises a plurality of base stations 2306A, 2306B, 2306C, such as Node Bs, eNBs, gNBs, or other types of wireless Access Points (APs), each defining a corresponding coverage area 2308A, 2308B, 2308C. Each base station 2306A, 2306B, 2306C is connectable to the core network 2304 over a wired or wireless connection 2310. A first UE 2312 located in coverage area 2308C is configured to wirelessly connect to, or be paged by, the corresponding base station 2306C. A second UE 2314 in coverage area 2308A is wirelessly connectable to the corresponding base station 2306A. While a plurality of UEs 2312, 2314 are illustrated in this example, the disclosed embodiments are equally applicable to a situation where a sole UE is in the coverage area or where a sole UE is connecting to the corresponding base station 2306.

The telecommunication network 2300 is itself connected to a host computer 2316, which may be embodied in the hardware and/or software of a standalone server, a cloud-implemented server, a distributed server, or as processing resources in a server farm. The host computer 2316 may be under the ownership or control of a service provider, or may be operated by the service provider or on behalf of the service provider. Connections 2318 and 2320 between the telecommunication network 2300 and the host computer 2316 may extend directly from the core network 2304 to the host computer 2316 or may go via an optional intermediate network 2322. The intermediate network 2322 may be one of, or a combination of more than one of, a public, private, or hosted network; the intermediate network 2322, if any, may be a backbone network or the Internet; in particular, the intermediate network 2322 may comprise two or more sub-networks (not shown).

The communication system of Figure 23 as a whole enables connectivity between the connected UEs 2312, 2314 and the host computer 2316. The connectivity may be described as an Over-the-Top (OTT) connection 2324. The host computer 2316 and the connected UEs 2312, 2314 are configured to communicate data and/or signaling via the OTT connection 2324, using the access network 2302, the core network 2304, any intermediate network 2322, and possible further infrastructure (not shown) as intermediaries. The OTT connection 2324 may be transparent in the sense that the participating communication devices through which the OTT connection 2324 passes are unaware of routing of uplink and downlink communications. For example, the base station 2306 may not or need not be informed about the past routing of an incoming downlink communication with data originating from the host computer 2316 to be forwarded (e.g., handed over) to a connected UE 2312. Similarly, the base station 2306 need not be aware of the future routing of an outgoing uplink communication originating from the UE 2312 towards the host computer 2316.

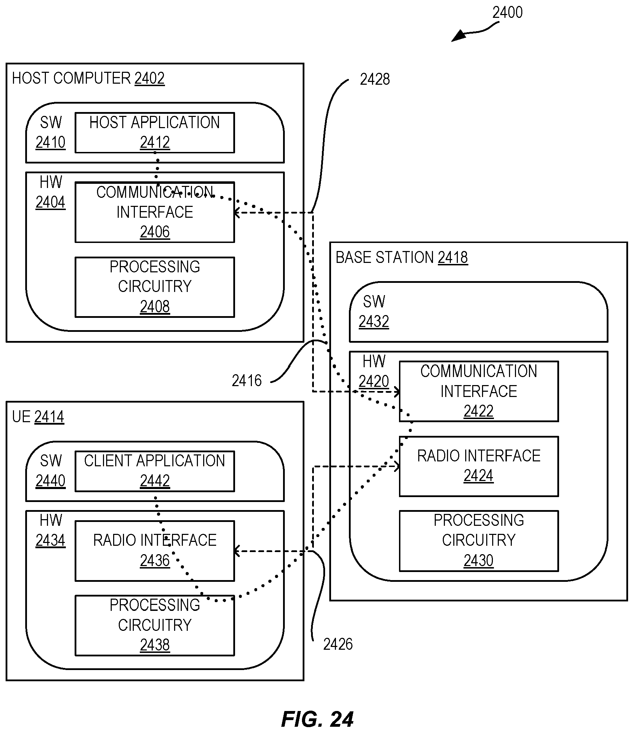

Example implementations, in accordance with an embodiment, of the UE, base station, and host computer discussed in the preceding paragraphs will now be described with reference to Figure 24. In a communication system 2400, a host computer 2402 comprises hardware 2404 including a communication interface 2406 configured to set up and maintain a wired or wireless connection with an interface of a different communication device of the communication system 2400. The host computer 2402 further comprises processing circuitry 2408, which may have storage and/or processing capabilities. In particular, the processing circuitry 2408 may comprise one or more programmable processors, ASICs, FPGAs, or combinations of these (not shown) adapted to execute instructions. The host computer 2402 further comprises software 2410, which is stored in or accessible by the host computer 2402 and executable by the processing circuitry 2408. The software 2410 includes a host application 2412. The host application 2412 may be operable to provide a service to a remote user, such as a UE 2414 connecting via an OTT connection 2416 terminating at the UE 2414 and the host computer 2402. In providing the service to the remote user, the host application 2412 may provide user data which is transmitted using the OTT connection 2416.

The communication system 2400 further includes a base station 2418 provided in a telecommunication system and comprising hardware 2420 enabling it to communicate with the host computer 2402 and with the UE 2414. The hardware 2420 may include a communication interface 2422 for setting up and maintaining a wired or wireless connection with an interface of a different communication device of the communication system 2400, as well as a radio interface 2424 for setting up and maintaining at least a wireless connection 2426 with the UE 2414 located in a coverage area (not shown in Figure 24) served by the base station 2418. The communication interface 2422 may be configured to facilitate a connection 2428 to the host computer 2402. The connection 2428 may be direct or it may pass through a core network (not shown in Figure 24) of the telecommunication system and/or through one or more intermediate networks outside the telecommunication system. In the embodiment shown, the hardware 2420 of the base station 2418 further includes processing circuitry 2430, which may comprise one or more programmable processors, ASICs, FPGAs, or combinations of these (not shown) adapted to execute instructions. The base station 2418 further has software 2432 stored internally or accessible via an external connection.

The communication system 2400 further includes the UE 2414 already referred to. The UE's 2414 hardware 2434 may include a radio interface 2436 configured to set up and maintain a wireless connection 2426 with a base station serving a coverage area in which the UE 2414 is currently located. The hardware 2434 of the UE 2414 further includes processing circuitry 2438, which may comprise one or more programmable processors, ASICs, FPGAs, or combinations of these (not shown) adapted to execute instructions. The UE 2414 further comprises software 2440, which is stored in or accessible by the UE 2414 and executable by the processing circuitry 2438. The software 2440 includes a client application 2442. The client application 2442 may be operable to provide a service to a human or non-human user via the UE 2414, with the support of the host computer 2402. In the host computer 2402, the executing host application 2412 may communicate with the executing client application 2442 via the OTT connection 2416 terminating at the UE 2414 and the host computer 2402. In providing the service to the user, the client application 2442 may receive request data from the host application 2412 and provide user data in response to the request data. The OTT connection 2416 may transfer both the request data and the user data. The client application 2442 may interact with the user to generate the user data that it provides.

It is noted that the host computer 2402, the base station 2418, and the UE 2414 illustrated in Figure 24 may be similar or identical to the host computer 2316, one of the base stations 2306A, 2306B, 2306C, and one of the UEs 2312, 2314 of Figure 23, respectively. This is to say, the inner workings of these entities may be as shown in Figure 24 and independently, the surrounding network topology may be that of Figure 23.

In Figure 24, the OTT connection 2416 has been drawn abstractly to illustrate the communication between the host computer 2402 and the UE 2414 via the base station 2418 without explicit reference to any intermediary devices and the precise routing of messages via these devices. The network infrastructure may determine the routing, which may be configured to hide from the UE 2414 or from the service provider operating the host computer 2402, or both. While the OTT connection 2416 is active, the network infrastructure may further take decisions by which it dynamically changes the routing (e.g., on the basis of load balancing consideration or reconfiguration of the network).

The wireless connection 2426 between the UE 2414 and the base station 2418 is in accordance with the teachings of the embodiments described throughout this disclosure. One or more of the various embodiments improve the performance of OTT services provided to the UE 2414 using the OTT connection 2416, in which the wireless connection 2426 forms the last segment. More precisely, the teachings of these embodiments may improve e.g., data rate, latency, and/or power consumption and thereby provide benefits such as e.g., reduced user waiting time, relaxed restriction on file size, better responsiveness, and/or extended battery lifetime.

A measurement procedure may be provided for the purpose of monitoring data rate, latency, and other factors on which the one or more embodiments improve. There may further be an optional network functionality for reconfiguring the OTT connection 2416 between the host computer 2402 and the UE 2414, in response to variations in the measurement results. The measurement procedure and/or the network functionality for reconfiguring the OTT connection 2416 may be implemented in the software 2410 and the hardware 2404 of the host computer 2402 or in the software 2440 and the hardware 2434 of the UE 2414, or both. In some embodiments, sensors (not shown) may be deployed in or in association with communication devices through which the OTT connection 2416 passes; the sensors may participate in the measurement procedure by supplying values of the monitored quantities exemplified above, or supplying values of other physical quantities from which the software 2410, 2440 may compute or estimate the monitored quantities. The reconfiguring of the OTT connection 2416 may include message format, retransmission settings, preferred routing, etc.; the reconfiguring need not affect the base station 2418, and it may be unknown or imperceptible to the base station 2418. Such procedures and functionalities may be known and practiced in the art. In certain embodiments, measurements may involve proprietary UE signaling facilitating the host computer 2402's measurements of throughput, propagation times, latency, and the like. The measurements may be implemented in that the software 2410 and 2440 causes messages to be transmitted, in particular empty or 'dummy' messages, using the OTT connection 2416 while it monitors propagation times, errors, etc.

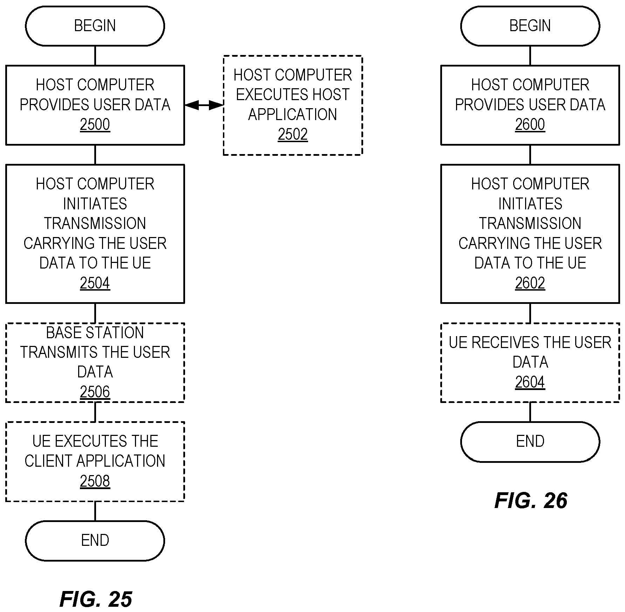

Figure 25 is a flowchart illustrating a method implemented in a communication system, in accordance with one embodiment. The communication system includes a host computer, a base station, and a UE which may be those described with reference to Figures 23 and 24. For simplicity of the present disclosure, only drawing references to Figure 25 will be included in this section. In step 2500, the host computer provides user data. In sub-step 2502 (which may be optional) of step 2500, the host computer provides the user data by executing a host application. In step 2504, the host computer initiates a transmission carrying the user data to the UE. In step 2506 (which may be optional), the base station transmits to the UE the user data which was carried in the transmission that the host computer initiated, in accordance with the teachings of the embodiments described throughout this disclosure. In step 2508 (which may also be optional), the UE executes a client application associated with the host application executed by the host computer.

Figure 26 is a flowchart illustrating a method implemented in a communication system, in accordance with one embodiment. The communication system includes a host computer, a base station, and a UE which may be those described with reference to Figures 23 and 24. For simplicity of the present disclosure, only drawing references to Figure 26 will be included in this section. In step 2600 of the method, the host computer provides user data. In an optional sub-step (not shown) the host computer provides the user data by executing a host application. In step 2602, the host computer initiates a transmission carrying the user data to the UE. The transmission may pass via the base station, in accordance with the teachings of the embodiments described throughout this disclosure. In step 2604 (which may be optional), the UE receives the user data carried in the transmission.

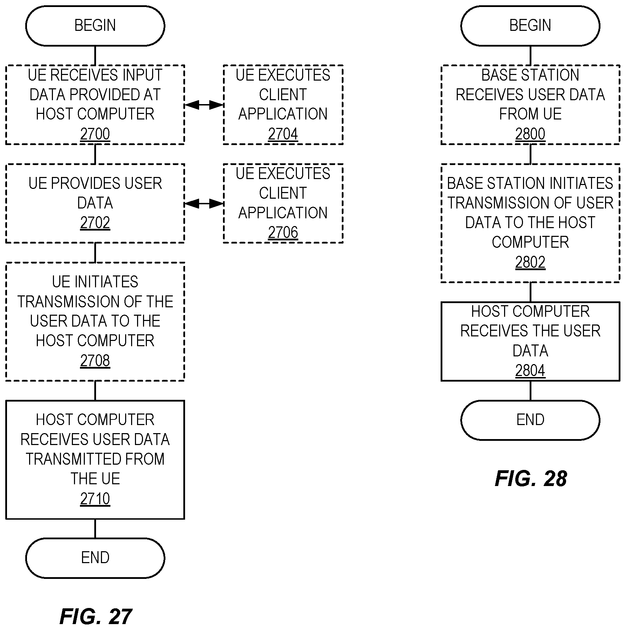

Figure 27 is a flowchart illustrating a method implemented in a communication system, in accordance with one embodiment. The communication system includes a host computer, a base station, and a UE which may be those described with reference to Figures 23 and 24. For simplicity of the present disclosure, only drawing references to Figure 27 will be included in this section. In step 2700 (which may be optional), the UE receives input data provided by the host computer. Additionally or alternatively, in step 2702, the UE provides user data. In sub-step 2704 (which may be optional) of step 2700, the UE provides the user data by executing a client application. In sub-step 2706 (which may be optional) of step 2702, the UE executes a client application which provides the user data in reaction to the received input data provided by the host computer. In providing the user data, the executed client application may further consider user input received from the user. Regardless of the specific manner in which the user data was provided, the UE initiates, in sub-step 2708 (which may be optional), transmission of the user data to the host computer. In step 2710 of the method, the host computer receives the user data transmitted from the UE, in accordance with the teachings of the embodiments described throughout this disclosure.

Figure 28 is a flowchart illustrating a method implemented in a communication system, in accordance with one embodiment. The communication system includes a host computer, a base station, and a UE which may be those described with reference to Figures 23 and 24. For simplicity of the present disclosure, only drawing references to Figure 28 will be included in this section. In step 2800 (which may be optional), in accordance with the teachings of the embodiments described throughout this disclosure, the base station receives user data from the UE. In step 2802 (which may be optional), the base station initiates transmission of the received user data to the host computer. In step 2804 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

Some example embodiments of the present disclosure are as follows:

### Group A Embodiments

Embodiment 1: A method performed by a wireless device for deactivating HARQ mechanisms, the method comprising at least one of: receiving, from a base station, an explicit or implicit indication that HARQ mechanisms are at least partially deactivated for an uplink or downlink transmission; determining that HARQ mechanisms are at least partially deactivated for the transmission based on the indication; and transmitting/receiving the transmission with HARQ mechanisms at least partially deactivated.

Embodiment 2: The method of embodiment 1 wherein the explicit or implicit indication is a HARQ process ID associated with the transmission, the HARQ process ID being predefined or preconfigured as a HARQ process ID for which HARQ mechanisms are at least partially deactivated.

Embodiment 3: The method of embodiment 1 wherein receiving the explicit or implicit indication that HARQ mechanisms are at least partially deactivated for the uplink or downlink transmission comprises receiving downlink control information that schedules the uplink or downlink transmission, the downlink control information comprising the indication.

Embodiment 4: The method of embodiment 3 wherein the indication is an explicit indication comprised in the downlink control information.

Embodiment 5: The method of embodiment 1 wherein receiving the explicit or implicit indication that HARQ mechanisms are at least partially deactivated for the uplink or downlink transmission comprises receiving an indication that the wireless device should not have a physical uplink control channel resource for HARQ feedback, which serves as an implicit indication that HARQ mechanisms for the transmission are at least partially deactivated.

Embodiment 6: The method of any one of the embodiments 1 to 5 wherein the base station is a base station of a satellite-based radio access network.

Embodiment 7: The method of any one of embodiments 1 to 6 wherein transmitting/receiving the transmission with HARQ mechanisms at least partially deactivated comprises transmitting/receiving the transmission via a satellite link.

Embodiment 8: A method performed by a wireless device for deactivating HARQ mechanisms, the method comprising: transmitting/receiving a data or control transmission to/from a base station on a logical channel that bypasses HARQ mechanisms.

Embodiment 9: The method of embodiment 8 further comprising receiving, from a base station, a configuration to use the logical channel that bypasses HARQ mechanisms.

Embodiment 10: The method of embodiment 8 or 9 wherein the base station is a base station of a satellite-based radio access network.

Embodiment 11: The method of any one of embodiments 8 to 10 wherein transmitting/receiving the data or control transmission comprises transmitting/receiving the data or control transmission via a satellite link.

Embodiment 12: The method of any of the previous embodiments, further comprising: providing user data; and forwarding the user data to a host computer via the transmission to the base station.

### Group B Embodiments

Embodiment 13: A method performed by a base station for deactivating HARQ mechanisms, the method comprising at least one of: transmitting, to a wireless device, an explicit or implicit indication that HARQ mechanisms are at least partially deactivated for an uplink or downlink transmission; and transmitting/receiving the transmission with HARQ mechanisms at least partially deactivated.

Embodiment 14: The method of embodiment 13 wherein the explicit or implicit indication is a HARQ process ID associated with the transmission, the HARQ process ID being predefined or preconfigured as a HARQ process ID for which HARQ mechanisms are at least partially deactivated.

Embodiment 15: The method of embodiment 13 wherein transmitting the explicit or implicit indication that HARQ mechanisms are at least partially deactivated for the uplink or downlink transmission comprises transmitting downlink control information that schedules the uplink or downlink transmission, the downlink control information comprising the indication.

Embodiment 16: The method of embodiment 15 wherein the indication is an explicit indication comprised in the downlink control information.

Embodiment 17: The method of embodiment 13 wherein transmitting the explicit or implicit indication that HARQ mechanisms are at least partially deactivated for the uplink or downlink transmission comprises transmitting an indication that the wireless device should not have a physical uplink control channel resource for HARQ feedback, which serves as an implicit indication that HARQ mechanisms for the transmission are at least partially deactivated.

Embodiment 18: The method of any one of the embodiments 13 to 17 wherein the base station is a base station of a satellite-based radio access network.

Embodiment 19: The method of any one of embodiments 13 to 18 wherein transmitting/receiving the transmission with HARQ mechanisms at least partially deactivated comprises transmitting/receiving the transmission via a satellite link.

Embodiment 20: A method performed by a base station for deactivating HARQ mechanisms, the method comprising: transmitting/receiving a data or control transmission to/from a wireless device on a logical channel that bypasses HARQ mechanisms.

Embodiment 21: The method of embodiment 20 further comprising transmitting, to the wireless device, a configuration to use the logical channel that bypasses HARQ mechanisms.

Embodiment 22: The method of embodiment 20 or 21 further comprising determining that the logical channel that bypasses HARQ mechanisms should be used for the data or control transmission to/from the wireless device.

Embodiment 23: The method of any one of embodiments 20 to 22 wherein the base station is a base station of a satellite-based radio access network.

Embodiment 24: The method of any one of embodiments 20 to 23 wherein transmitting/receiving the data or control transmission comprises transmitting/receiving the data or control transmission via a satellite link.

Embodiment 25: The method of any of the previous embodiments, further comprising: obtaining user data; and forwarding the user data to a host computer or a wireless device.

### Group C Embodiments

Embodiment 26: A wireless device for deactivating HARQ mechanisms, the wireless device comprising: processing circuitry configured to perform any of the steps of any of the Group A embodiments; and power supply circuitry configured to supply power to the wireless device.

Embodiment 27: A base station for deactivating HARQ mechanisms, the base station comprising: processing circuitry configured to perform any of the steps of any of the Group B embodiments; and power supply circuitry configured to supply power to the base station.

Embodiment 28: A User Equipment, UE, for deactivating HARQ mechanisms, the UE comprising: an antenna configured to send and receive wireless signals; radio front-end circuitry connected to the antenna and to processing circuitry, and configured to condition signals communicated between the antenna and the processing circuitry; the processing circuitry being configured to perform any of the steps of any of the Group A embodiments; an input interface connected to the processing circuitry and configured to allow input of information into the UE to be processed by the processing circuitry; an output interface connected to the processing circuitry and configured to output information from the UE that has been processed by the processing circuitry; and a battery connected to the processing circuitry and configured to supply power to the UE.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | 3rd Generation Partnership Project |
| • 5G | Fifth Generation |
| • ACK | Acknowledgement |
| • AP | Access Point |
| • ASIC | Application Specific Integrated Circuit |
| • BLER | Block Error Rate |
| • CE | Control Element |
| • CPU | Central Processing Unit |
| • DCI | Downlink Control Information |
| • DSP | Digital Signal Processor |
| • CSI | Channel State Information |
| • eNB | Enhanced or Evolved Node B |
| • FPGA | Field Programmable Gate Array |
| • GEO | Geostationary Orbit |
| • gNB | New Radio Base Station |
| • HARQ | Hybrid Automatic Repeat Request |
| • ID | Identity |
| • IoT | Internet of Things |
| • km | Kilometer |
| • LEO | Low Earth Orbit |
| • LTE | Long Term Evolution |
| • MAC | Medium Access Control |
| • MCS | Modulation and Coding Scheme |
| • MEO | Medium Earth Orbit |
| • MME | Mobility Management Entity |
| • ms | Millisecond |
| • MTC | Machine Type Communication |
| • NACK | Negative Acknowledgement |
| • NDI | New Data Indicator |
| • NGSO | Non-Geostationary Orbit |
| • NR | New Radio |
| • OTT | Over-the-Top |
| • PDCP | Packet Data Convergence Protocol |
| • PDSCH | Physical Downlink Shared Channel |
| • P-GW | Packet Date Network Gateway |
| • PHY | Physical |
| • PUCCH | Physical Uplink Control Channel |
| • PUSCH | Physical Uplink Shared Channel |
| • RAM | Random Access Memory |
| • RAN | Radio Access Network |
| • RLC | Radio Link Control |
| • RNTI | Radio Network Temporary Identifier |
| • ROM | Read Only Memory |
| • RTT | Round Trip Time |
| • RRC | Radio Resource Control |
| • SAW | Stop-and-Wait |
| • SCEF | Service Capability Exposure Function |
| • SC-MCCH | Single Cell Multicast Control Channel |
| • SC-MTCH | Single Cell Multicast Traffic Channel |
| • SC-PTM | Single Cell Point to Multipoint |
| • SI | Study Item |
| • TBS | Transport Block Size |
| • TCP | Transmission Control Protocol |
| • TR | Technical Report |
| • TTI | Transmit Time Interval |
| • UCI | Uplink Control Channel |
| • UE | User Equipment |

Those skilled in the art will recognize improvements and modifications to the embodiments of the present disclosure. All such improvements and modifications are considered within the scope of the concepts disclosed herein.

### References

[1] TR 38.811, Study on New Radio (NR) to support non-terrestrial networks
[2] RP-181370, Study on solutions evaluation for NR to support non-terrestrial network

### Example Embodiments (EEs)

EE1. A method performed by a wireless device for deactivating Hybrid Automatic Repeat Request, HARQ, mechanisms, the method comprising:
receiving (502, 602, 702, 904, 1006, 1102, 1204, 1304, 1604, 1704), from a base station, an explicit or implicit indication that HARQ mechanisms are at least partially deactivated for an uplink or downlink transmission;
determining (504, 604, 704, 906, 1008, 1104, 1206, 1306, 1606, 1706) that HARQ mechanisms are at least partially deactivated for the uplink or downlink transmission based on the explicit or implicit indication; and
transmitting/receiving (506, 606, 706, 908, 1010, 1106, 1208, 1308, 1608, 1708) the uplink or downlink transmission with HARQ mechanisms at least partially deactivated.

EE2. The method of EE1 wherein the explicit or implicit indication is a HARQ process Identity, ID, associated with the uplink or downlink transmission, the HARQ process ID being predefined or preconfigured as a HARQ process ID for which HARQ mechanisms are at least partially deactivated.

EE3. The method of EE2 wherein receiving (502, 602, 702, 904, 1006, 1102, 1204, 1304, 1604, 1704) the explicit or implicit indication that HARQ mechanisms are at least partially deactivated for the uplink or downlink transmission comprises receiving (502) downlink control information that schedules the uplink or downlink transmission, the downlink control information comprising the HARQ process ID for which HARQ mechanisms are at least partially deactivated.

EE4. The method of EE1 wherein receiving (502, 602, 702, 904, 1006, 1102, 1204, 1304, 1604, 1704) the explicit or implicit indication that HARQ mechanisms are at least partially deactivated for the uplink or downlink transmission comprises receiving (602) downlink control information that schedules the uplink or downlink transmission, the downlink control information comprising the explicit or implicit indication.

EE5. The method of EE4 wherein the explicit or implicit indication is an explicit indication comprised in the downlink control information.

EE6. The method of any of EE1 to EE5 wherein HARQ mechanisms are partially deactivated, and the method further comprises sending, to the base station, a quantized version of Block Error Rate, BLER, statistics maintained by the wireless device.

EE7. The method of EE1 wherein receiving (502, 602, 702, 904, 1006, 1102, 1204, 1304, 1604, 1704) the explicit or implicit indication that HARQ mechanisms are at least partially deactivated for the uplink or downlink transmission comprises receiving (702) downlink control information that schedules the uplink or downlink transmission, the downlink control information being scrambled with a particular radio network temporary identifier that serves as the explicit or implicit indication that HARQ mechanisms are at least partially deactivated for the uplink or downlink transmission.

EE8. The method of EE1 further comprising:
receiving (900, 1000), via Medium Access Control, MAC, signaling, an indication of one or more HARQ processes for which HARQ mechanisms are at least partially disabled;
wherein receiving (502, 602, 702, 904, 1006, 1102, 1204, 1304, 1604, 1704) the explicit or implicit indication that HARQ mechanisms are at least partially deactivated for the uplink or downlink transmission comprises receiving (904, 1006) downlink control information that schedules the uplink or downlink transmission, the downlink control information comprising a HARQ Identity, ID, that corresponds to one of the one or more HARQ processes for which HARQ mechanisms are at least partially disabled such that the HARQ ID serves as the explicit or implicit indication that HARQ mechanisms are at least partially deactivated for the uplink or downlink transmission.

EE9. The method of EE8 wherein receiving (900, 1000) the indication of the one or more HARQ processes for which HARQ mechanisms are at least partially disabled comprises receiving (900, 1000) a MAC Control Element, CE, comprising, for each HARQ process of a plurality of HARQ processes, an indication of whether or not HARQ mechanisms are deactivated for the HARQ process.

EE10. The method of EE9 further comprising receiving (1002), via MAC signaling, an indication to toggle the indications comprised in the MAC CE.

EE11. The method of EE1 wherein receiving (502, 602, 702, 904, 1006, 1102, 1204, 1304, 1604, 1704) the explicit or implicit indication that HARQ mechanisms are at least partially deactivated for the uplink or downlink transmission comprises receiving (1102) an indication that the wireless device should not have a physical uplink control channel resource for HARQ feedback, which serves as the explicit or implicit indication that HARQ mechanisms for the uplink or downlink transmission are at least partially deactivated.

EE12. The method of EE1 wherein receiving (502, 602, 702, 904, 1006, 1102, 1204, 1304, 1604, 1704) the explicit or implicit indication that HARQ mechanisms are at least partially deactivated for the uplink or downlink transmission comprises receiving (1204) downlink control information that schedules the uplink or downlink transmission, the downlink control information comprising a HARQ feedback timing indicator that is set to a value that serves as the explicit or implicit indication that HARQ mechanisms for the uplink or downlink transmission are at least partially deactivated.

EE13. The method of EE1 further comprising:
receiving (1300), from the base station, an indication of one or more HARQ processes for which HARQ mechanisms are activated;
wherein receiving (502, 602, 702, 904, 1006, 1102, 1204, 1304, 1604, 1704) the explicit or implicit indication that HARQ mechanisms are at least partially deactivated for the uplink or downlink transmission comprises receiving (1304) downlink control information that schedules the uplink or downlink transmission, the downlink control information comprising a HARQ Identity, ID, of a HARQ process other than the one or more HARQ processes for which HARQ mechanisms are activated that serves as the indication to at least partially disable HARQ mechanisms for the uplink or downlink transmission.

EE14. The method of EE1 further comprising:
- receiving (1600), from the base station, an indication to ignore a new data indicator field of downlink control information for a specified set of HARQ processes;
- wherein:
   ∘ receiving (502, 602, 702, 904, 1006, 1102, 1204, 1304, 1604, 1704) the explicit or implicit indication that HARQ mechanisms are at least partially deactivated for the uplink or downlink transmission comprises receiving (1604) downlink control information that schedules the uplink or downlink transmission, the downlink control information comprising:
      ▪ a HARQ Identity, ID, that corresponds to one of the HARQ processes in the specified set of HARQ processes; and
      ▪ a new data indicator field; and
   ∘ transmitting/receiving (506, 606, 706, 908, 1010, 1106, 1208, 1308, 1608, 1708) the uplink or downlink transmission with HARQ mechanisms at least partially deactivated comprises transmitting/receiving (1608) the uplink or downlink transmission while ignoring the new data indicator field of the downlink control information.

EE15. The method of EE1 further comprising:
receiving (1700), from the base station, an indication to interpret a new data indicator field of downlink control information for a specified set of HARQ processes as an indication of whether or not HARQ mechanisms are at least partially deactivated;
wherein receiving (502, 602, 702, 904, 1006, 1102, 1204, 1304, 1604, 1704) the explicit or implicit indication that HARQ mechanisms are at least partially deactivated for the uplink or downlink transmission comprises receiving (1704) downlink control information that schedules the uplink or downlink transmission, the downlink control information comprising:
   a HARQ Identity, ID, that corresponds to one of the HARQ processes in the specified set of HARQ processes; and
   a new data indicator field that is set to a value that, when the new data indicator field is interpreted as an indication of whether or not HARQ mechanisms are at least partially deactivated, serves as the explicit or implicit indication that HARQ mechanisms for the uplink or downlink transmission are at least partially deactivated.

EE16. The method of any one of EE1 to EE15 wherein the base station is a base station of a satellite-based radio access network.

EE17. The method of any one of EE1 to EE16 wherein transmitting/receiving (506, 606, 706, 908, 1010, 1106, 1208, 1308, 1608, 1708) the uplink or downlink transmission with HARQ mechanisms at least partially deactivated comprises transmitting/receiving (506, 606, 706, 908, 1010, 1106, 1208, 1308, 1608, 1708) the uplink or downlink transmission via a satellite link.

EE18. A wireless device (408, 2100) for deactivating Hybrid Automatic Repeat Request, HARQ mechanisms, the wireless device (408, 2100) comprising:
one or more transmitters (2108);
one or more receivers (2110); and
processing circuitry (2102) associated with the one or more transmitters (2108) and the one or more receivers (2110), the processing circuitry (2102) configured to cause the wireless device (408, 2100) to:
   receive (502, 602, 702, 904, 1006, 1102, 1204, 1304, 1604, 1704), from a base station, an explicit or implicit indication that HARQ mechanisms are at least partially deactivated for an uplink or downlink transmission;
   determine (504, 604, 704, 906, 1008, 1104, 1206, 1306, 1606, 1706) that HARQ mechanisms are at least partially deactivated for the uplink or downlink transmission based on the explicit or implicit indication; and
   transmit/receive (506, 606, 706, 908, 1010, 1106, 1208, 1308, 1608, 1708) the uplink or downlink transmission with HARQ mechanisms at least partially deactivated.

EE19. The wireless device (408, 2100) of EE18 wherein the processing circuitry (2102) is further configured to cause the wireless device (408, 2100) to perform the method of any one of EE2 to EE17.

EE20. A method performed by a wireless device for deactivating Hybrid Automatic Repeat Request, HARQ, mechanisms, the method comprising:
transmitting/receiving (1502) a data or control transmission to/from a base station on a logical channel that bypasses HARQ mechanisms.

EE21. The method of EE20 further comprising receiving, from the base station, a configuration to use the logical channel that bypasses HARQ mechanisms.

EE22. The method of EE20 or EE21 wherein the base station is a base station of a satellite-based radio access network.

EE23. The method of any one of EE20 to EE22 wherein transmitting/receiving (1502) the data or control transmission comprises transmitting/receiving (1502) the data or control transmission via a satellite link.

EE24. A wireless device (408, 2100) for deactivating Hybrid Automatic Repeat Request, HARQ mechanisms, the wireless device (408, 2100) comprising:
one or more transmitters (2108);
one or more receivers (2110); and
processing circuitry (2102) associated with the one or more transmitters (2108) and the one or more receivers (2110), the processing circuitry (2102) configured to cause the wireless device (408, 2100) to transmit/receive (1502) a data or control transmission to/from a base station on a logical channel that bypasses HARQ mechanisms.

EE25. The wireless device (408, 2100) of EE24 wherein the processing circuitry (2102) is further configured to cause the wireless device (408, 2100) to perform the method of any one of EE21 to EE23.

EE26. A method performed by a base station for deactivating Hybrid Automatic Repeat Request, HARQ, mechanisms, the method comprising:
transmitting (502, 602, 702, 904, 1006, 1102, 1204, 1304, 1604, 1704), to a wireless device, an explicit or implicit indication that HARQ mechanisms are at least partially deactivated for an uplink or downlink transmission; and
transmitting/receiving (506, 606, 706, 908, 1010, 1106, 1208, 1308, 1608, 1708) the uplink or downlink transmission with HARQ mechanisms at least partially deactivated.

EE27. The method of EE26 wherein the explicit or implicit indication is a HARQ process Identity, ID, associated with the uplink or downlink transmission, the HARQ process ID being predefined or preconfigured as a HARQ process ID for which HARQ mechanisms are at least partially deactivated.

EE28. The method of EE27 wherein transmitting (502, 602, 702, 904, 1006, 1102, 1204, 1304, 1604, 1704) the explicit or implicit indication that HARQ mechanisms are at least partially deactivated for the uplink or downlink transmission comprises transmitting (502) downlink control information that schedules the uplink or downlink transmission, the downlink control information comprising the HARQ process ID for which HARQ mechanisms are at least partially deactivated.

EE29. The method of EE26 wherein transmitting (502, 602, 702, 904, 1006, 1102, 1204, 1304, 1604, 1704) the explicit or implicit indication that HARQ mechanisms are at least partially deactivated for the uplink or downlink transmission comprises transmitting (602) downlink control information that schedules the uplink or downlink transmission, the downlink control information comprising the explicit or implicit indication.

EE30. The method of EE29 wherein the explicit or implicit indication is an explicit indication comprised in the downlink control information.

EE31. The method of any of EE26 to EE30 wherein HARQ mechanisms are partially deactivated, and the method further comprises receiving, from the wireless device, a quantized version of Block Error Rate, BLER, statistics maintained by the wireless device.

EE32. The method of EE26 wherein transmitting (502, 602, 702, 904, 1006, 1102, 1204, 1304, 1604, 1704) the explicit or implicit indication that HARQ mechanisms are at least partially deactivated for the uplink or downlink transmission comprises transmitting (702) downlink control information that schedules the uplink or downlink transmission, the downlink control information being scrambled with a particular radio network temporary identifier that serves as the explicit or implicit indication that HARQ mechanisms are at least partially deactivated for the uplink or downlink transmission.

EE33. The method of EE26 further comprising:
transmitting (900, 1000), to the wireless device via Medium Access Control, MAC, signaling, an indication of one or more HARQ processes for which HARQ mechanisms are at least partially disabled;
wherein transmitting (502, 602, 702, 904, 1006, 1102, 1204, 1304, 1604, 1704) the explicit or implicit indication that HARQ mechanisms are at least partially deactivated for the uplink or downlink transmission comprises transmitting (904, 1006) downlink control information that schedules the uplink or downlink transmission, the downlink control information comprising a HARQ Identity, ID, that corresponds to one of the one or more HARQ processes for which HARQ mechanisms are at least partially disabled such that the HARQ ID serves as the explicit or implicit indication that HARQ mechanisms are at least partially deactivated for the uplink or downlink transmission.

EE34. The method of EE33 wherein transmitting (900, 1000) the indication of one or more HARQ processes for which HARQ mechanisms are at least partially disabled comprises transmitting (900, 1000) a MAC Control Element, CE, comprising, for each HARQ process of a plurality of HARQ processes, an indication of whether or not HARQ mechanisms are deactivated for the HARQ process.

EE35. The method of EE34 further comprising transmitting (1002), via MAC signaling, an indication to toggle the indications comprised in the MAC CE.

EE36. The method of EE26 wherein transmitting (502, 602, 702, 904, 1006, 1102, 1204, 1304, 1604, 1704) the explicit or implicit indication that HARQ mechanisms are at least partially deactivated for the uplink or downlink transmission comprises transmitting (1104) an indication that the wireless device should not have a physical uplink control channel resource for HARQ feedback, which serves as the explicit or implicit indication that HARQ mechanisms for the uplink or downlink transmission are at least partially deactivated.

EE37. The method of EE26 wherein transmitting (502, 602, 702, 904, 1006, 1102, 1204, 1304, 1604, 1704) the explicit or implicit indication that HARQ mechanisms are at least partially deactivated for the uplink or downlink transmission comprises transmitting (1204) downlink control information that schedules the uplink or downlink transmission, the downlink control information comprising a HARQ feedback timing indicator that is set to a value that serves as the explicit or implicit indication that HARQ mechanisms for the uplink or downlink transmission are at lea.st partially deactivated.

EE38. The method of EE26 further comprising signaling, to the wireless device, information that declares the value as a null-resource such that the value serves as an indication that HARQ mechanisms are disabled.

EE39. The method of EE26 further comprising:
transmitting (1300), to the wireless device via Radio Resource Control, RRC, signaling, an indication of one or more HARQ processes for which HARQ mechanisms are activated;
wherein transmitting (502, 602, 702, 904, 1006, 1102, 1204, 1304, 1604, 1704) the explicit or implicit indication that HARQ mechanisms are at least partially deactivated for the uplink or downlink transmission comprises transmitting (1304) downlink control information that schedules the uplink or downlink transmission, the downlink control information comprising a HARQ Identity, ID, of a HARQ process other than the one or more HARQ processes for which HARQ mechanisms are activated that serves as the explicit or implicit indication to at least partially disable HARQ mechanisms for the uplink or downlink transmission.

EE40. The method of EE26 further comprising:
- transmitting (1600), to the wireless device, an indication to ignore a new data indicator field of downlink control information for a specified set of HARQ processes;
- wherein:
   ∘ transmitting (502, 602, 702, 904, 1006, 1102, 1204, 1304, 1604, 1704) the explicit or implicit indication that HARQ mechanisms are at least partially deactivated for the uplink or downlink transmission comprises transmitting (1604) downlink control information that schedules the uplink or downlink transmission, the downlink control information comprising:
      ▪ a HARQ Identity, ID, that corresponds to one of the HARQ processes in the specified set of HARQ processes; and
      ▪ a new data indicator field; and
   ∘ transmitting/receiving (506, 606, 706, 908, 1010, 1106, 1208, 1308, 1608, 1708) the uplink or downlink transmission with HARQ mechanisms at least partially deactivated comprises transmitting/receiving (1608) the uplink or downlink transmission in a manner in which the new data indicator field of the downlink control information is ignored by the wireless device.

EE41. The method of EE26 further comprising:
transmitting (1700), to the wireless device, an indication to interpret a new data indicator field of downlink control information for a specified set of HARQ processes as an indication of whether or not HARQ mechanisms are at least partially deactivated;
wherein transmitting (502, 602, 702, 904, 1006, 1102, 1204, 1304, 1604, 1704) the explicit or implicit indication that HARQ mechanisms are at least partially deactivated for the uplink or downlink transmission comprises transmitting (1704) downlink control information that schedules the uplink or downlink transmission, the downlink control information comprising:
   a HARQ Identity, ID, that corresponds to one of the HARQ processes in the specified set of HARQ processes; and
   a new data indicator field that is set to a value that, when the new data indicator field is interpreted as an indication of whether or not HARQ mechanisms are at least partially deactivated, serves as the explicit or implicit indication that HARQ mechanisms for the uplink or downlink transmission are at least partially deactivated.

EE42. The method of any one of EE26 to EE41 wherein the base station is a base station of a satellite-based radio access network.

EE43. The method of any one of EE26 to EE42 wherein transmitting/receiving (506, 606, 706, 908, 1010, 1106, 1208, 1308, 1608, 1708) the uplink or downlink transmission with HARQ mechanisms at least partially deactivated comprises transmitting/receiving (506, 606, 706, 908, 1010, 1106, 1208, 1308, 1608, 1708) the uplink or downlink transmission via a satellite link.

EE44. A base station (402, 1800) for deactivating Hybrid Automatic Repeat Request, HARQ mechanisms, the base station (402, 1800) comprising:
processing circuitry (1804) configured to cause the base station (402, 1800) to:
transmit (502, 602, 702, 904, 1006, 1102, 1204, 1304, 1604, 1704), to a wireless device, an explicit or implicit indication that HARQ mechanisms are at least partially deactivated for an uplink or downlink transmission; and
transmit/receive (506, 606, 706, 908, 1010, 1106, 1208, 1308, 1608, 1708) the uplink or downlink transmission with HARQ mechanisms at least partially deactivated.

EE45. The base station (402, 1800) of EE44 wherein the processing circuitry (1804) is further configured to cause the base station (402, 1800) to perform the method of any of EE27 to EE43.

EE46. A method performed by a base station for deactivating Hybrid Automatic Repeat Request, HARQ, mechanisms, the method comprising:
transmitting/receiving (1502) a data or control transmission to/from a wireless device on a logical channel that bypasses HARQ mechanisms.

EE47. The method of EE46 further comprising transmitting, to the wireless device, a configuration to use the logical channel that bypasses HARQ mechanisms.

EE48. The method of EE46 or EE47 further comprising determining (1500) that the logical channel that bypasses HARQ mechanisms should be used for the data or control transmission to/from the wireless device.

EE49. The method of any one of EE46 to EE48 wherein the base station is a base station of a satellite-based radio access network.

EE50. The method of any one of EE46 to EE49 wherein transmitting/receiving the data or control transmission comprises transmitting/receiving the data or control transmission via a satellite link.

EE51. A base station (402, 1800) for deactivating Hybrid Automatic Repeat Request, HARQ mechanisms, the base station (402, 1800) comprising:
processing circuitry (1804) configured to cause the base station (402, 1800) to transmit/receive (1502) a data or control transmission to/from a wireless device on a logical channel that bypasses HARQ mechanisms.

EE52. The base station (402, 1800) of EE51 wherein the processing circuitry (1804) is further configured to cause the base station (402, 1800) to perform the method of any of EE47 to EE50.

## Claims

1. A method performed by a wireless device, the method comprising:
being configured with a plurality of Hybrid Automatic Repeat Request, HARQ, processes, wherein the plurality of HARQ processes comprises a HARQ process for which a HARQ mechanism is activated, and wherein the plurality of HARQ processes comprises a HARQ process for which the HARQ mechanism is at least partially deactivated;
receiving, from a base station, downlink control information that schedules an uplink transmission or downlink transmission, wherein the downlink control information indicates the HARQ process for which the HARQ mechanism is at least partially deactivated;
determining that the HARQ mechanism is at least partially deactivated for the uplink transmission or downlink transmission based on the indication in the downlink control information; and
transmitting/receiving the uplink transmission or downlink transmission with the HARQ mechanism at least partially deactivated.

2. The method of claim 1, wherein the indication in the downlink control information is a HARQ process Identity, ID, associated with the HARQ process for which the HARQ mechanism is at least partially deactivated.

3. The method of any of the preceding claims, wherein the configuration of the plurality of HARQ processes is provided at least partially via Radio Resource Control, RRC, signaling.

4. The method of any of the preceding claims, wherein the downlink control information schedules a downlink transmission, and wherein the wireless device receives the downlink transmission without sending any HARQ feedback for the downlink transmission.

5. The method of any of claims 1-3, wherein the downlink control information schedules an uplink transmission, and wherein the wireless device transmits the uplink transmission with the HARQ mechanisms at least partially deactivated.

6. The method of any of the preceding claims, wherein the HARQ process for which the HARQ mechanism is at least partially deactivated is HARQ process number 0.

7. The method of any of the preceding claims, wherein the base station is part of a non-terrestrial radio access network.

8. A wireless device comprising:
one or more transmitters;
one or more receivers; and
processing circuitry associated with the one or more transmitters and the one or more receivers, the processing circuitry configured to cause the wireless device to:
be configured with a plurality of Hybrid Automatic Repeat Request, HARQ, processes, wherein the plurality of HARQ processes comprises a HARQ process for which a HARQ mechanism is activated, and wherein the plurality of HARQ processes comprises a HARQ process for which the HARQ mechanism is at least partially deactivated;
receive, from a base station, downlink control information that schedules an uplink transmission or downlink transmission, wherein the downlink control information indicates the HARQ process for which the HARQ mechanism is at least partially deactivated;
determine that the HARQ mechanism is at least partially deactivated for the uplink transmission or downlink transmission based on the indication in the downlink control information; and
transmit/receive the uplink transmission or downlink transmission with the HARQ mechanism at least partially deactivated.

9. The wireless device of claim 8, wherein the indication in the downlink control information is a HARQ process Identity, ID, associated with the HARQ process for which the HARQ mechanism is at least partially deactivated.

10. The wireless device of any of claims 8-9, wherein the configuration of the plurality of HARQ processes is provided at least partially via Radio Resource Control, RRC, signaling.

11. The wireless device of any of claims 8-10, wherein the downlink control information schedules a downlink transmission, and wherein the wireless device is configured to receives the downlink transmission without sending any HARQ feedback for the downlink transmission.

12. The wireless device of any of claims 8-10, wherein the downlink control information schedules an uplink transmission, and wherein the wireless device transmits the uplink transmission with the HARQ mechanisms at least partially deactivated.

13. The wireless device of any of claims 8-12, wherein the HARQ process for which the HARQ mechanism is at least partially deactivated is HARQ process number 0.

14. A method performed by a base station, the method comprising:
configuring a wireless device with a plurality of Hybrid Automatic Repeat Request, HARQ, processes, wherein the plurality of HARQ processes comprises a HARQ process for which a HARQ mechanism is activated, and wherein the plurality of HARQ processes comprises a HARQ process for which the HARQ mechanism is at least partially deactivated;
transmitting, to the wireless device, downlink control information that schedules an uplink transmission or downlink transmission, wherein the downlink control information indicates the HARQ process for which the HARQ mechanism is at least partially deactivated; and
transmitting/receiving the uplink transmission or downlink transmission with the HARQ mechanism at least partially deactivated.

15. A base station comprising processing circuitry configured to cause the base station to:
configure a wireless device with a plurality of Hybrid Automatic Repeat Request, HARQ, processes, wherein the plurality of HARQ processes comprises a HARQ process for which a HARQ mechanism is activated, and wherein the plurality of HARQ processes comprises a HARQ process for which the HARQ mechanism is at least partially deactivated;
transmit, to the wireless device, downlink control information that schedules an uplink transmission or downlink transmission, wherein the downlink control information indicates the HARQ process for which the HARQ mechanism is at least partially deactivated; and
transmit/receive the uplink transmission or downlink transmission with the HARQ mechanism at least partially deactivated.
